(19) Europäisches Patentamt / European Patent Office / Office européen des brevets

(11) **EP 4 426 035 A1**

(12) **EUROPEAN PATENT APPLICATION**
published in accordance with Art. 153(4) EPC

(43) Date of publication:
**04.09.2024 Bulletin 2024/36**

(21) Application number: **22901857.7**

(22) Date of filing: **02.12.2022**

(51) International Patent Classification (IPC):
**H04W 72/04** (2023.01)   **H04L 5/00** (2006.01)

(52) Cooperative Patent Classification (CPC):
**H04L 5/00; H04W 72/04**

(86) International application number:
**PCT/KR2022/019446**

(87) International publication number:
**WO 2023/101499 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.12.2021   KR 20210172098
10.12.2021   KR 20210176586**

(71) Applicant: **Samsung Electronics Co., Ltd.
Suwon-si, Gyeonggi-do 16677 (KR)**

(72) Inventors:
• **YOON, Suha**
  **Suwon-si, Gyeonggi-do 16677 (KR)**
• **KIM, Youngbum**
  **Suwon-si, Gyeonggi-do 16677 (KR)**
• **RYU, Hyunseok**
  **Suwon-si, Gyeonggi-do 16677 (KR)**
• **MYUNG, Seho**
  **Suwon-si, Gyeonggi-do 16677 (KR)**
• **JUNG, Euichang**
  **Suwon-si, Gyeonggi-do 16677 (KR)**

(74) Representative: **Nederlandsch Octrooibureau
P.O. Box 29720
2502 LS The Hague (NL)**

(54) **BANDWIDTH-BASED SYNCHRONIZATION SIGNAL CONFIGURATION METHOD AND APPARATUS**

(57)    The present disclosure relates to a method performed by a base station of a wireless communication system and to an apparatus for performing same. The method may comprise the steps of: confirming that a first bandwidth, which is smaller than a preconfigured bandwidth, is used in a frequency band operated by the base station; and transmitting, to a terminal, configuration information for CORESET having an index of 0, on the basis of the first bandwidth, wherein the CORESET having an index of 0 may include a plurality of resource element groups (REGs) to which a control channel element (CCE) is mapped, and the CCE may be mapped to the plurality of REGs according to one of non-interleaved mapping and interleaved mapping using the number of resource blocks (RBs) included in the first bandwidth.

FIG. 16

EP 4 426 035 A1

**Description**

**[Technical Field]**

The disclosure relates to a method and an apparatus for supporting a small bandwidth (e.g., 5 MHz or less) in a wireless communication system. More specifically, the disclosure relates to a method and an apparatus for performing configuration associated with a synchronization signal and a CORESET to enable a wireless communication system (e.g., 5G, new radio (NR)) to operate even in a smaller bandwidth.

**[Background Art]**

5th generation (5G) mobile communication technologies define broad frequency bands such that high transmission rates and new services are possible, and can be implemented not only in "Sub 6GHz" bands such as 3.5 GHz, but also in "Above 6 GHz" bands referred to as mmWave including 28 GHz and 39 GHz. In addition, it has been considered to implement 6th generation (6G) mobile communication technologies (referred to as Beyond 5G systems) in terahertz bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive multi input multi output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

**[Disclosure of Invention]**

**[Technical Problem]**

A technical task to be achieved according to various embodiments of the disclosure is to provide a method and an apparatus for operating a wireless communication system based on a bandwidth.

In addition, a technical task to be achieved according to various embodiments of the disclosure is to provide a synchronization method for operating a wireless communication system in a smaller bandwidth, and a method and an apparatus for configuring parameters for supporting a smaller bandwidth and performing communication using the same.

**[Solution to Problem]**

A method performed by a base station in a wireless communication system according to an embodiment of the disclosure may include identifying that a first bandwidth having a size smaller than a preconfigured bandwidth is used in a frequency band operated by the base station, and transmitting, to a terminal, configuration information for a CORESET having an index of 0, based on the first bandwidth, wherein the CORESET having an index of 0 includes a plurality of resource element groups (REGs) to which a control channel element (CCE) is mapped, and wherein the CCE is mapped to the plurality of REGs according to one of non-interleaved mapping or interleaved mapping using the number of resource blocks (RBs) included in the first bandwidth.

A method performed by a terminal in a wireless communication system according to an embodiment of the disclosure may include identifying that a first bandwidth having a size smaller than a preconfigured bandwidth is used in a frequency band accessed by the terminal, and receiving configuration information for a CORESET having an index of 0, based on the first bandwidth, wherein the CORESET having an index of 0 includes a plurality of resource element groups (REGs) to which a control channel element (CCE) is mapped, and wherein the CCE is mapped to the plurality of REGs according to one of non-interleaved mapping or interleaved mapping using the number of resource blocks (RBs) included in the first bandwidth.

A base station in a wireless communication system according to an embodiment of the disclosure may include a transceiver, and a controller configured to perform control to identify that a first bandwidth having a size smaller than a preconfigured bandwidth is used in a frequency band operated by the base station, and transmit, to a terminal, configuration information for a CORESET having an index of 0, based on the first bandwidth, wherein the CORESET having an index of 0 includes a plurality of resource element groups (REGs) to which a control channel element (CCE) is mapped, and wherein the CCE is mapped to the plurality of REGs according to one of non-interleaved mapping or interleaved mapping using the number of resource blocks (RBs) included in the first bandwidth.

A terminal in a wireless communication system according to an embodiment of the disclosure may include a transceiver, and a controller configured to perform control to identify that a first bandwidth having a size smaller than a preconfigured bandwidth is used in a frequency band accessed by the terminal, and receive configuration information for a CORESET having an index of 0, based on the first bandwidth, wherein the CORESET having an index of 0 includes a plurality of resource element groups (REGs) to which a control channel element (CCE) is mapped, and wherein the CCE is mapped to the plurality of REGs according to one of non-interleaved mapping or interleaved mapping using the number of resource blocks (RBs) included in the first bandwidth.

The technical problems to be achieved in the embodiment of the disclosure are not limited to the technical problems mentioned above, and other technical problems not mentioned herein will be clearly understood from the following description by those skilled in the art to which the disclosure belongs.

**[Advantageous Effects of Invention]**

According to various embodiments of the disclosure, a method and an apparatus for operating a wireless communication system based on a bandwidth may be provided.

Further, according to various embodiments of the disclosure, it is possible to provide a synchronization method for operating a wireless communication system in a smaller bandwidth, and a method and an apparatus for configuring a parameter to support a smaller bandwidth and performing communication using the same.

Yet further, according to various embodiments of the disclosure, it is possible to determine a method for CCE-to-REG mapping to CORESET#0 in a smaller bandwidth.

Still further, according to various embodiments of the disclosure, it is possible to determine a CCE index and an aggregation level of a search space set associated with CORESET#0 in a smaller bandwidth.

Even further, according to various embodiments of the disclosure, it is possible to determine a ratio of PSS EPRE to SSS EPRE in an SS/PBCH block in a smaller bandwidth.

**[Brief Description of Drawings]**

FIG. 1 illustrates a structure of a next generation mobile communication system according to an embodiment of the disclosure.

FIG. 2 illustrates a wireless protocol structure of a next generation mobile communication system according to an embodiment of the disclosure.

FIG. 3 illustrates a basic structure of a time-frequency domain, which is a radio resource region where data or control channels are transmitted in a 5G communication system, according to an embodiment of the disclosure.

FIG. 4 is a diagram illustrating an example of a slot structure considered in the 5G system, according to an embodiment of the disclosure.

FIG. 5 illustrates an example of a configuration of a bandwidth part in a 5G communication system, according to an embodiment of the disclosure.

FIG. 6 illustrates an example in which frequency and time resources are allocated for information transmission in an NR system according to an embodiment of the disclosure;

FIG. 7 illustrates an aspect in which a synchronization signal and a physical broadcast channel of an NR system are mapped in a frequency and a time domain according to an embodiment of the disclosure;

FIG. 8 illustrates an SSB configuration according to a subcarrier spacing according to an embodiment of the disclosure;

FIG. 9 illustrates symbols in a slot to which a single SS/PBCH block is mapped according to an embodiment of the disclosure;

FIG. 10 illustrates a problem caused by different subcarrier spacings in different communication systems according to an embodiment of the disclosure;

FIG. 11 illustrates a structure of a discontinuous SSB according to an embodiment of the disclosure;

FIG. 12 illustrates a symbol in which an SS/PBCH block may be transmitted according to a subcarrier spacing according to an embodiment of the disclosure;

FIG. 13 is another diagram illustrating a symbol in which an SS/PBCH block may be transmitted according to a subcarrier spacing according to an embodiment of the disclosure;

FIG. 14 illustrates an operation of a terminal according to various embodiments of the disclosure;

FIG. 15 illustrates an operation of a base station according to various embodiments of the disclosure;

FIG. 16 illustrates an example of a flowchart illustrating an operation of a terminal according to an embodiment of the disclosure;

FIG. 17 illustrates an example of a flowchart illustrating an operation of a base station according to an embodiment of the disclosure;

FIG. 18 illustrates a structure of a terminal according to an embodiment of the disclosure; and

FIG. 19 illustrates a structure of a base station according to an embodiment of the disclosure.

**[Mode for the Invention]**

Hereinafter, preferred embodiments of the disclosure will be described in detail with reference to the attached drawings. At this time, it should be noted that in the attached drawings, identical components are indicated by identical symbols whenever possible. Additionally, detailed descriptions of well-known functions and configurations that may obscure the gist of the disclosure will be omitted.

In describing the disclosure, a detailed description of known functions or configurations incorporated herein will be omitted when it is determined that the description may make the subject matter of the disclosure unnecessarily unclear. Such an omission of unnecessary descriptions is intended to prevent obscuring of the main idea of the disclosure and more clearly convey the main idea.

In the drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose and inform those skilled in the art of the scope of the disclosure, and the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create a means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which includes one or more executable instructions for implementing the specified logical function(s). It should also be noted that in some alternative implementations, the functions noted in the blocks may occur out of order. For example, two blocks shown in succession may in fact be executed concurrently or the blocks may sometimes be executed in the reverse order, depending upon the functionality involved.

As used herein, "unit" refers to a software element or a hardware element, such as a field programmable gate array (FPGA) or an application specific integrated circuit (ASIC), which performs a predetermined function. However, the term "unit" does not always have a meaning limited to software or hardware. "Unit" may be constructed either to be stored in an addressable storage medium or to execute one or more processors. Therefore, "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may either be combined into a smaller number of elements, or a "unit", or divided into a larger number of elements, or a "unit". Moreover, the elements and "units" may be implemented to reproduce one or more CPUs within a device or a security multimedia card.

Hereinafter, a base station is an entity that allocates resources to terminals, and may be at least one of a gNode B, an eNode B, a Node B, a BS, a wireless access unit, a BS controller, and a node on a network. A terminal may include a UE, a mobile station (MS), a cellular phone, a smartphone, a computer, or a multimedia system capable of performing communication functions. Further, embodiments of the disclosure may also be applied to other communication systems having similar technical backgrounds or channel types to the embodiments of the disclosure. In addition, based on determinations by those skilled in the art, the disclosure may be applied to other communication systems through some modifications without significantly departing from the scope of the disclosure. For example, this may include the 5th generation mobile communication technology (5G, new radio, NR) developed after LTE-A, and the term 5G hereinafter may also include existing LTE, LTE-A, and other similar services. In addition, based on determinations by those skilled in the art, the disclosure may be applied to other communication systems through some modifications without significantly departing from the scope of the disclosure.

As used in the following description, terms for identifying access nodes, terms for referring to network entities or network functions (NF), terms for referring to messages, terms for referring to interfaces between network entities, and terms for referring to various identifying information are exemplified for ease of explanation. Accordingly, the disclosure is not limited to the terms described herein, and other terms may be used to refer to objects having equivalent technical meaning.

For the convenience of the following description, the disclosure uses the terms and names defined as defined in the 3rd Generation Partnership Project (3GPP) LTE standard and/or 2GPP NR standard. However, the disclosure is not limited by these terms and names and may be equally applicable to systems complying with other standards.

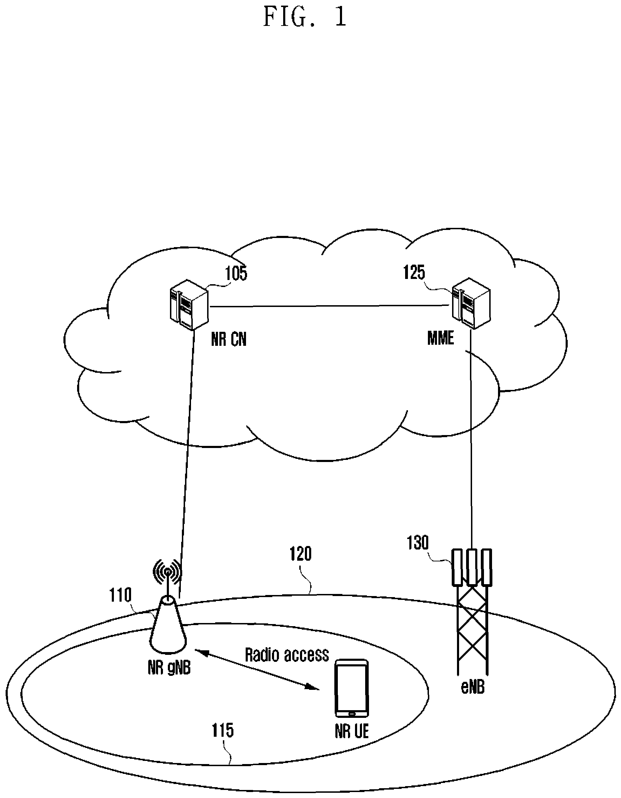

FIG. 1 illustrates a structure of a next generation mobile communication system according to an embodiment of the disclosure.

With reference to FIG. 1, the radio access network of a next generation mobile communication system (hereinafter referred to as NR or 5G) may be constituted of a New Radio Node B (hereinafter referred to as NR gNB or NR base station) 110 and a New Radio Core Network (NR CN) 105. The New Radio User Equipment (hereinafter NR UE or terminal) 115 may access the external network through the NR gNB 110 and the NR CN 105.

In FIG. 1, the NR gNB 110 may correspond to an Evolved Node B (eNB) of the legacy LTE system. The NR gNB may be connected to the NR UE 115 by a wireless channel and provide a far better service than the existing Node B. In next-generation mobile communication systems, all user traffic is served through a shared channel and therefore, a device that aggregates status information such as buffer status of UEs, available transmission power status, channel status, etc. and performs scheduling is required and the scheduling is performed by NR gNB 110. One NR gNB may control usually multiple cells. In the next-generation mobile communication system, bandwidths beyond the typical maximum bandwidth may be applied to realize ultra-high speed data transmission compared to the legacy LTE. In addition, the beamforming technology may be additionally applied using Orthogonal Frequency Division Multiplexing (OFDM) as a wireless access technology. In addition, the Adaptive Modulation & Coding (AMC) method, which determines the modulation scheme and channel coding rate according to the channel condition of the UE, may be applied.

The NR CN 105 may perform functions such as mobility support, bearer configuration, and QoS configuration. The NR CN may be connected to the multiple base stations as a device responsible for various control functions as well as mobility management functions for the UE. In addition, the next-generation mobile communication system may also be interworked with the legacy LTE system, and the NR CN may be connected to the MME 125 through a network interface. The MME may be connected to an LTE base station, the eNB 130.

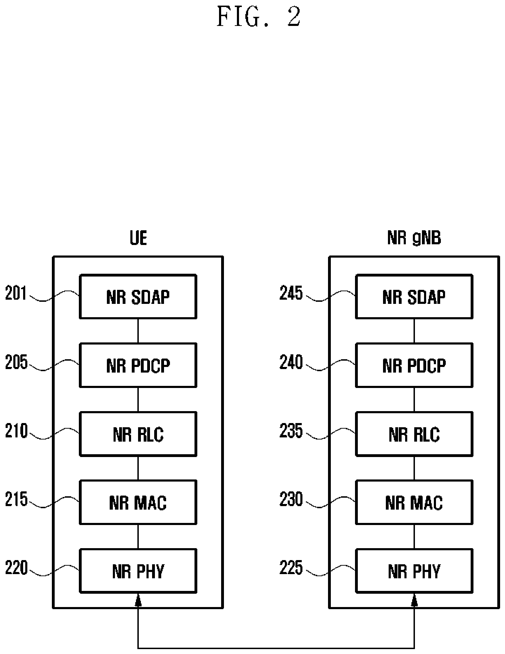

FIG. 2 illustrates a wireless protocol structure of a next generation mobile communication system according to an embodiment of the disclosure.

With reference to FIG. 2, the wireless protocols of a next-generation mobile communication system may consist of NR Service Data Adaptation Protocol (SDAP) 201 and 245, NR PDCP 205 and 240, NR RLC 210 and 235, and NR MAC 215 and 230, NR PHY (physical) 220 and 225 at the UE and the NR base station, respectively.

The main functions of NR SDAP 201 and 245 may include some of the following functions.

- transfer of user plane data
- mapping between a QoS flow and a DRB for both DL and UL
- marking QoS flow ID in both DL and UL packets for uplink and downlink
- reflective QoS flow to DRB mapping for the UL SDAP PDUs.

For SDAP layer devices, the UE may be configured by RRC message whether to use the SDAP layer device header or the functions of the SDAP layer device on a PDCP layer device level, a bearer level, or a logical channel level, and, if the SDAP header is used, the UE may use the NAS QoS reflective setting 1-bit indicator (NAS reflective QoS) and the AS QoS reflective setting 1-bit indicator (AS reflective QoS) in the SDAP header to instruct the UE to update or reconfigure the QoS flows and mapping information for uplink and downlink data bearers. The SDAP header may include QoS flow ID information indicating the QoS. The QoS information may be used as data processing priorities, scheduling information, etc. to support seamless service.

The main functions of NR PDCP 205 and 240 may include some of the following functions:

- Header compression and decompression: ROHC only,
- Transfer of user data,
- In-sequence delivery of upper layer PDUs,
- Out-of- sequence delivery of upper layer PDUs,
- PDCP PDU reordering for reception,
- Duplicate detection of lower layer SDUs,
- Retransmission of PDCP SDUs,
- Ciphering and deciphering, and/or
- Timer-based SDU discard in uplink.

In the above, the reordering function of the NR PDCP device means the function of reordering PDCP PDUs received from the lower layer based on PDCP sequence numbers (SN), and may include a function of delivering the data to the upper layer in the reordered order or a function of delivering the data directly without considering the order, may include a function of recording the lost PDCP PDUs after rearranging the order, may include a function of reporting the status of the lost PDCP PDUs to the transmitting side, and may include a function of requesting retransmission of the lost PDCP PDUs.

The main functions of NR RLC 210 and 235 may include some of the following functions:

- Transfer of upper layer PDUs,
- In-sequence delivery of upper layer PDUs,
- Out -of-sequence delivery of upper layer PDUs,
- Error Correction through ARQ,
- Concatenation, segmentation and reassembly of RLC SDUs,
- Re-segmentation of RLC data PDUs,
- Reordering of RLC data PDUs,

- Duplicate detection function,
- Protocol error detection,
- RLC SDU discard, and/or
- RLC re -establishment.

In the above, the in-sequence delivery function of the NR RLC device means the function of delivering RLC SDUs received from the lower layer to the higher layer in order. In the case that one RLC SDU is originally received by being divided into multiple RLC SDUs, the in-sequence delivery function of the NR RLC device may include the function of reassembling and delivering it.

The in-sequence delivery function of the NR RLC device may include a function to rearrange the received RLC PDUs based on the RLC SN (sequence number) or PDCP SN (sequence number), may include a function of recording the lost RLC PDUs after rearranging the order, may include a function of reporting the status of the lost RLC PDUs to the transmitting side, may include a function of requesting retransmission of the lost RLC PDUs.

The in-sequence delivery function of the NR RLC device 210 and 235 may include a function of delivering only the RLC SDUs to the upper layer in order up to the lost RLC SDU when there is a lost RLC SDU. Further, the in-sequence delivery function of the NR RLC device may include a function of delivering all RLC SDUs received before the timer starts to the upper layer in order if a predetermined timer expires even if there is a lost RLC SDU. In addition, the in-sequence delivery function of the NR RLC device may include a function of delivering all RLC SDUs received to date to the upper layer in order if a predetermined timer expires even if there is a lost RLC SDU.

The NR RLC device 210 and 235 may process RLC PDUs in the order they are received, regardless of the order of the sequence number (out-of-sequence delivery) and deliver them to the NR PDCP device 205 and 240.

When the NR RCL device 210 and 235 receives a segment, it may receive segments stored in a buffer or to be received later, reconstruct them into one complete RLC PDU, and then transmit it to the NR PDCP device.

The NR RLC layer may not include a concatenation function, and may perform the function in the NR MAC layer or replace it with the multiplexing function of the NR MAC layer.

In the above, the out-of-sequence delivery function of the NR RLC device means the function of directly delivering RLC SDUs received from a lower layer to the upper layer regardless of their order, and may include a function of reassembling and delivering when one RLC SDU is originally received by being divided into several RLC SDUs, and may include a function of storing the RLC SN or PDCP SN of received RLC PDUs, sorting the order, and recording lost RLC PDUs.

The NR MAC 215 and 230 may be connected to multiple NR RLC layer devices configured in one UE, and the main functions of NR MAC may include some of the following functions:

- Mapping between logical channels and transport channels,
- Multiplexing/demultiplexing of MAC SDUs,
- Scheduling information reporting,
- Error correction through HARQ,
- Priority handling between logical channels of one UE,
- Priority handling between UEs by means of dynamic scheduling,
- MBMS service identification function,
- Transport format selection, and/or
- Padding function.

The NR PHY layer 220 and 225 may perform the operations of channel-coding and modulating the upper layer data into OFDM symbols and transmitting through the wireless channel, or demodulating and channel-decoding the OFDM symbols received through the wireless channel and delivering them to the upper layer.

Hereinafter, a frame structure of a 5G system is described in more detail with reference to the drawings.

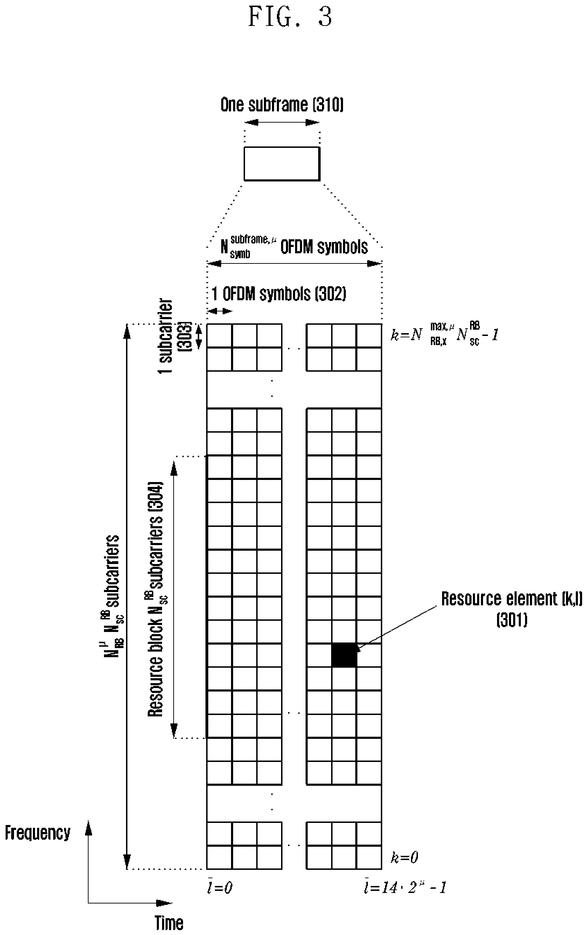

FIG. 3 illustrates a basic structure of a time-frequency domain, which is a radio resource region where data or control channels are transmitted in a 5G system.

In FIG. 3, a horizontal axis indicates a time domain and a vertical axis indicates a frequency domain. The basic unit of resources in the time and frequency domain is a resource element (RE) 301 and may be defined as 1 orthogonal frequency division multiplexing (OFDM) symbol 302 in the time axis and 1 subcarrier 303 in the frequency axis. In the frequency domain, $N_{SC}^{RB}$ (for example, 12) successive REs may correspond to one resource block (RB) 304.

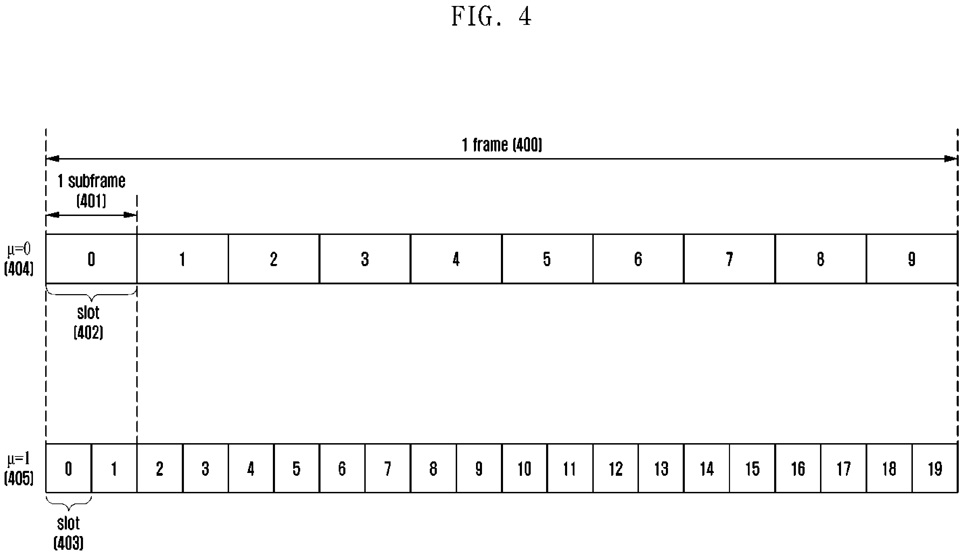

FIG. 4 is a diagram illustrating an example of a slot structure considered in the 5G system.

In FIG. 4, an example of the structure of a frame 400, a subframe 401, and a slot 402 is illustrated. 1 frame 400 may be defined as 10 milliseconds (ms). 1 subframe 401 may be defined as 1 ms, and accordingly one frame 400 may include a total of 10 subframes 401. 1 slot 402 or 403 may be defined as 14 OFDM symbols (that is, the number symbols $N_{symb}^{slot}$ per slot =14). 1 subframe 401 may include one or a plurality of slots 402 and 403, and the number of slots 402 or 403 per subframe 401 may vary depending on a configuration value $\mu$ 404 or 405 for subcarrier spacing. FIG. 4 illustrates the case in which the subcarrier spacing configuration value 404 is $\mu=0$ and the case in which the subcarrier spacing configuration value 405 is $\mu=1$. 1 subframe 401 may include one slot 402 in the case of $\mu=0$ 404,

and 1 subframe 401 may include 2 slots 403 in the case of $\mu=1$ 405. That is, the number ( $N_{slot}^{subframe,\mu}$ ) of slots per subframe may vary depending on the configuration value ($\mu$) for subcarrier spacing, and accordingly the number ( $N_{slot}^{frame,\mu}$ )) of slots per frame may vary. The number ( $N_{slot}^{subframe,\mu}$ )) and the number ( $N_{slot}^{frame,\mu}$ )) according to the subcarrier spacing configuration value $\mu$ may be defined as shown in Table 1 below.

[Table 1]

| | b | ne$\mu$ | frame,$\mu$ |
|---|---|---|---|
| | | | |
| | | | |
| | | | |
| | | | |
| | | | |
| | | | |

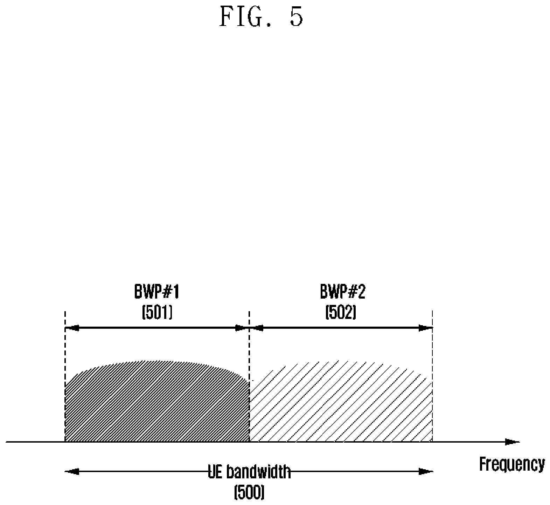

Subsequently, a configuration of a bandwidth part (BWP) in a 5G system is described in detail with reference to the FIG. 5.

FIG. 5 illustrates an example of a configuration of a bandwidth part in a 5G communication system.

In FIG. 5, a UE bandwidth 500 is configured as two bandwidth parts, that is, BWP #1 501 and BWP #2 502. The BS may configure one or a plurality of BWPs in the UE, and the following information provided below in Table 2 may be configured to each BWP. The BWP below may be referred to as BWP configuration information.

[Table 2]

| | |
|---|---|
| BWP ::= | SEQUENCE { |
| bwp-Id | BWP-Id, |
| (bandwidth part identifier) | |
| locationAndBandwidth | INTEGER (1..65536), |
| (bandwidth part location) | |
| subcarrierSpacing | ENUMERATED |
| n1, n2, n3, n4, n5}, | |
| (subcarrier spacing) | |
| cyclicPrefix | ENUMERATED |
| ended } | |
| (cyclic prefix) | |

Of course, the disclosure is not limited to the aforementioned example, and various parameters related to a BWP as well as the configuration information may be configured in the UE. The information may be transmitted to the UE from the BS through higher-layer signaling, for example, radio resource control (RRC) signaling. Among one or a plurality of configured BWPs, at least one BSP may be activated. Information indicating whether to activate the configured BWPs may be semi-statically transferred from the BS to the UE through RRC signaling or may be dynamically transferred through DCI.

According to some embodiment, the UE, prior to radio resource control (RRC) connection, may have an initial BWP for initial access configured by the base station through a master information block (MIB). To be more specific, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured by the MIB may be considered as identity (ID) 0. The base station may notify the UE of configuration information, such as frequency allocation information regarding control resource set #0, time allocation information, and numerology, through the MIB. In addition, the base station may notify the UE of configuration information regarding the monitoring cycle and occasion regarding control resource set #0, that is, configuration information regarding control resource set #0, through the MIB. The UE may consider that a frequency domain configured by control resource set #0 acquired from the MIB is an initial bandwidth part for initial access. The ID of the initial bandwidth part may be considered to be 0.

Reference is made to Table 3 below in which the MIB information is illustrated. The UE may identify, through a value of the PDCCH-ConfigSIBl parameter included in the received MIB, CORESET#0(Control Resource Set #0) via which a PDCCH for scheduling a PDSCH carrying a system information block (SIB1) may be transmitted.

[Table 3]

| ::= | SEQUENCE { |
|---|---|
| ystemFrameNumber | BIT STRING (SIZE (6)), |
| ubCarrierSpacingCommon | ENUMERATED {scs15or60, scs30or120}, |
| sb-SubcarrierOffset | INTEGER (0..15), |
| lmrs-TypeA-Position | ENUMERATED {pos2, pos3}, |
| dcch-ConfigSIB1 | PDCCH-ConfigSIB1, |
| ellBarred | ENUMERATED {barred, notBarred}, |

| ntraFreqReselection | ENUMERATED {allowed, notAllowed}, |
|---|---|
| pare | BIT STRING (SIZE (1)) |

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE such that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing, and when data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth (for example, 100MHz) and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth, for example, a bandwidth part of 20MHz, for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through a master information block (MIB) in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

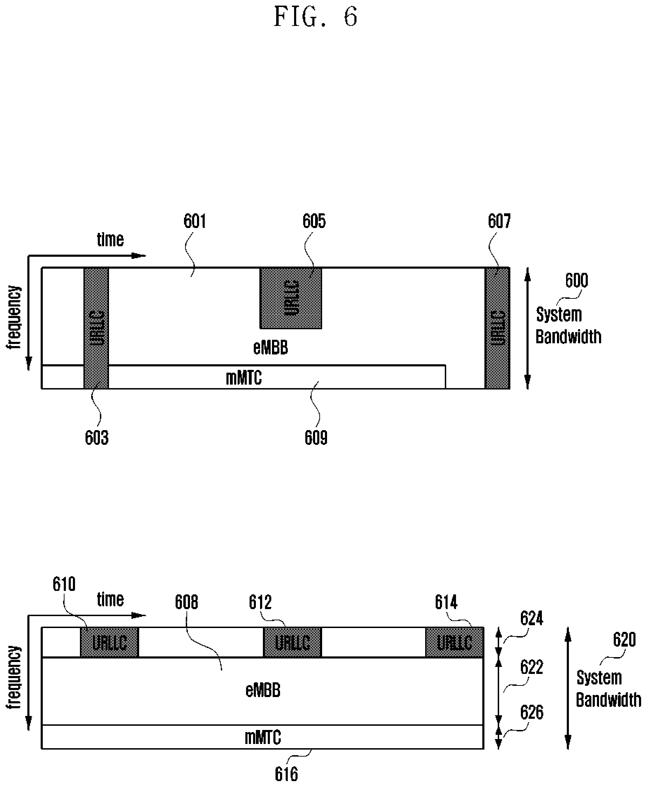

FIG. 6 illustrates an example in which frequency and time resources are allocated for information transmission in an NR system according to an embodiment of the disclosure.

Referring to FIG. 6, a method, in which frequency and time resources are allocated for information transmission in each system, can be identified. First, an aspect is shown in which resources for data for eMBB, URLLC, and mMTC are allocated in the entire system frequency bandwidth 600. When URLLC data 603, 605, and 607 are generated and needed to be transmitted while a resource 601 allocated for eMBB and a resource 609 allocated for mMTC are allocated and transmitted in a specific frequency bandwidth, the URLLC data 603, 605, and 607 may be transmitted by emptying a portion in which the resource 601 allocated for eMBB and the resource 609 allocated for the mMTC data 609 are already allocated or by not performing transmission of the same. Since the URLLC needs to reduce a delay time in the middle of performing the services described above, the URLLC data 603, 605, and 607 may be allocated and transmitted in a portion of a resource 601 allocated for the eMBB data. Of course, in a case where the URLLC data are additionally allocated and transmitted in the resource allocated for the eMBB data, the eMBB data may not be transmitted in an overlapped frequency-time resource, and thus the transmission performance of the eMBB data may be lowered. That is, in the above case, failure of eMBB data transmission due to URLLC data allocation may occur.

In addition, the entire system frequency bandwidth 620 may be divided into subbands 622, 624, and 626 and each sub-band may be used for transmission of services and data. Information associated with sub-band configuration may be predetermined, and the information may be transmitted to a terminal by a base station via higher layer signaling. Alternatively, the information associated with the sub-band may be randomly divided by a base station or a network node and services may be provided to the terminal without separately transmitting the sub-band configuration information. FIG. 6 illustrates an aspect in which a sub-band 622 is used for transmission of eMBB data (indicated by reference numeral 608), a sub-band 624 is used for transmission of URLLC data (indicated by reference numerals 610, 612, and 614), and a sub-band 626 is used for transmission of mMTC data (indicated by reference numeral 616).

Throughout the embodiment, the length of a transmission time interval (TTI) used for URLLC data transmission may be shorter than the length of TTI used for eMBB data or mMTC data transmission. In addition, the response of information related to the URLLC data may be transmitted faster than that of eMBB data or mMTC data, and accordingly information transmission or reception having a low delay may be performed. The structures of physical layer channels used to transmit the above three types of services or data may be different. For example, at least one of the length of a transmission time interval (TTI), the allocation unit of frequency resources, a structure of a control channel, and a data mapping method may be different.

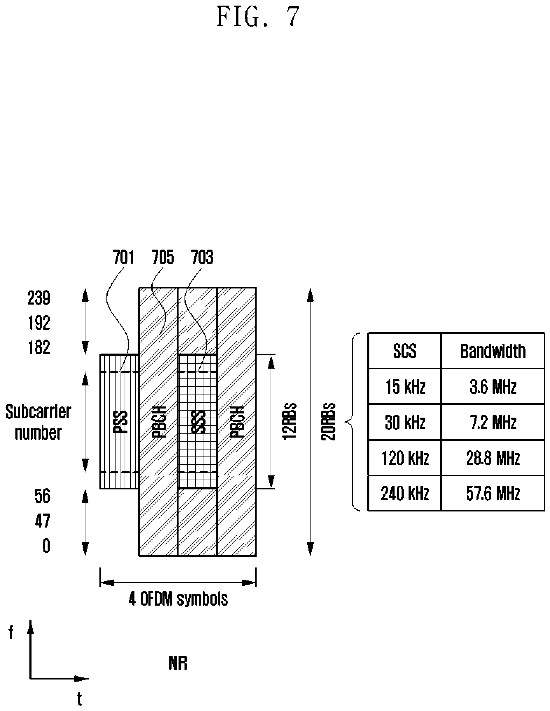

In the above, three types of services and three types of data are described, but more types of services and corresponding data may exist, and in this case, the content of the disclosure may be applied. FIG. 7 illustrates an aspect in which a synchronization signal and a physical broadcast channel of an NR system according to an embodiment of the disclosure are mapped in a frequency and a time domain.

In the 5G communication system, a synchronization signal block (SSB) is provided for synchronization (time/frequency) of the terminal. A single SSB may include a primary synchronization signal (PSS) 701, a secondary synchronization signal (SSS) 703, and a physical broadcast channel (PBCH) 705. A base station supporting the 5G communication system may transmit at least one SSB. A terminal supporting the 5G communication system may perform synchronization with the base station by receiving at least one SSB. An SSB configured by PSS 701, SSS 703, and PBCH 705 is mapped over 4 OFDM symbols on the time axis. PSS 701 and SSS 703 are mapped to 12 RBs on the frequency axis, and PBCH 705 is mapped to 20 RBs on the frequency axis. Since one RB includes 12 subcarriers, when the subcarrier spacing (SCS) changes, the size of the RB changes, and when the size of the RB changes, the size of the frequency band occupied by 12RB and 20RB may change. The table of FIG. 7 shows how the frequency bands (size of SSB frequency bands) of 20 RBs change according to a subcarrier spacing. When the SCS is 15 kHz, the frequency band of one SSB has a bandwidth of 15 kHz * 12 * 20 = 3.6 MHz, and when the SCS is 30 kHz, one SSB has a bandwidth of 30 kHz * 12 * 20 = 7.2 MHz. A resource region in which the PSS 701, SSS 703, and PBCH 705 are transmitted may be referred to as an SS/PBCH block. In addition, the SS/PBCH block may be referred to as an SSB block.

The terminal may obtain information (e.g., PDCCH-ConfigSIB 1) for a PDCCH for receiving system information (e.g., SIB 1) necessary for initial access through the MIB of the PBCH. PDCCH-COnfigSIB 1 may include configuration information about a control resource set (CORESET) through which the PDCCH may be transmitted and a search space. The control resource set and search space configured by the MIB may be regarded as CORESET#0 and search space #0, respectively. The base station may notify the terminal of frequency allocation information (for example, the number of RBs), time allocation information (for example, the number of symbols), numerology, and configuration information such as an offset between an index of a common RB overlapping a first RB of SSB and the smallest RB of CORESET#0, through the MIB. In addition, the base station may notify the terminal of configuration information for a monitoring period and occasion for the control resource set #0, that is, configuration information for the search space #0, through the MIB.

Meanwhile, according to the current standard, the minimum number of RBs that may be configured with CORESET#0 is 24, and the minimum interval of subcarrier spacings that may be configured is 15 kHz. Therefore, when 15 kHz is used as the subcarrier spacing, CORESET#0 may have the minimum bandwidth of 4.32 MHz (15 kHz * 12 * 24).

Considering the aforementioned minimum bandwidth (3.6 MHz) of SSB and minimum bandwidth (4.32 MHz) of CORESET#0, a bandwidth less than 4.32 MHz (e.g., 3 MHz to 4 MHz, but not limited to, less than 3 MHz bandwidth) has a problem that cannot be operated because the size is smaller than the minimum bandwidth of SSB or the minimum bandwidth of CORESET#0. Therefore, a solution for operating a service in a small bandwidth, that is, networks currently operating in a small bandwidth in a system such as LTE cannot be upgraded to NR networks, so a solution therefor is needed.

Various embodiments of the disclosure provide a method of newly defining a subcarrier spacing smaller than 15 kHz and, when the subcarrier spacing is defined, changing and configuring various parameters according to changes in SSB design and subcarrier spacing.

In various embodiments of the disclosure, a new subcarrier spacing supported by the mobile communication system may be added. The new subcarrier spacing may be a subcarrier spacing smaller than 15 kHz, for example, 7.5 kHz ($\mu$ = -1), 3.75 kHz ($\mu$ = -2), and the like. In the following description, for convenience of explanation, the subcarrier spacing is 7.5 kHz, but various embodiments of the disclosure may be applied to various subcarrier spacings smaller than 7.5 kHz.

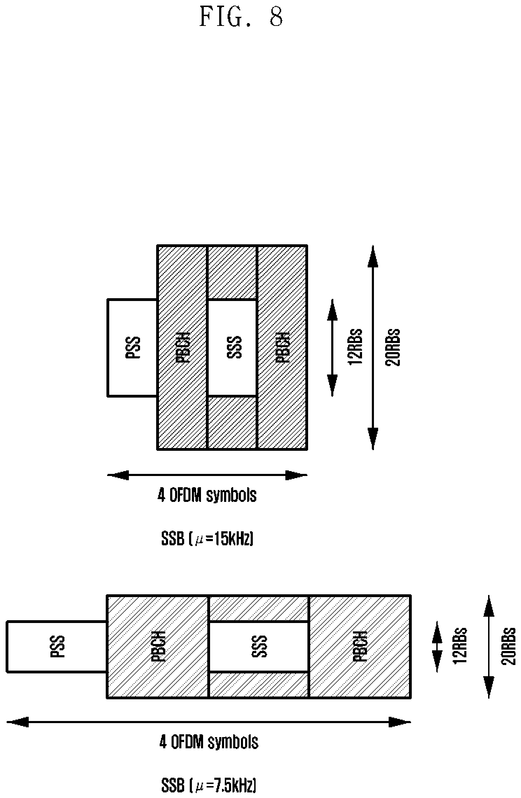

FIG. 8 illustrates an SSB configuration according to a subcarrier spacings according to an embodiment of the disclosure.

The general configuration and content of the SSB refer to the description of FIG. 7. Referring to FIG. 8, it may be noted that the bandwidth size of the SSB and the symbol size in a case of a subcarrier spacing of 15 kHz are different from those in a case of a subcarrier spacing of 7.5 kHz. In other words, the number of RBs constituting the SSB and the number of OFDM symbols are 20 and 4, respectively, which are same in both cases. However, since the subcarrier spacing and the size of the OFDM symbol are different, it may be noted that the size of the SSB on the frequency axis and the size of the SSB on the time axis differ. Specifically, when the subcarrier spacing is reduced from 15 kHz to 7.5 kHz, the size of the SSB on the frequency axis is reduced by 1/2, and the size of the SSB on time axis is doubled.

A base station according to an embodiment of the disclosure may generate and transmit channels and signals by using a subcarrier spacing ($\mu$) of 7.5 kHz. For example, the base station may generate and transmit channels and signals by configuring, as 7.5 kHz, the subcarrier spacing of subcarriers used for transmission of each signal and channel included in SSB (PSS, SSS, PBCH). Accordingly, the bandwidth of the SSB may be 7.5kHz * 12 * 20 = 1.8MHz.

According to an embodiment of the disclosure, a subcarrier spacing for CORESET#0 may be configured according to the subcarrier spacing of SSB. The base station may configure the subcarrier spacing of CORESET#0 corresponding to the subcarrier spacing of SSB (the subcarrier spacing of SSB and the subcarrier spacing of CORESET#0 may be the same). For example, when the subcarrier spacing of the SSB is 7.5 kHz, the base station may configure the resource of CORESET#0 as 7.5 kHz and transmit the configuration for CORESET#0 to the terminal. In addition, the base station may configure, as 7.5 kHz, the subcarrier spacing of a subcarrier to which a PDCCH transmitted through the CORESET#0 is mapped, and generate control information and transmit the control information through the PDCCH. When a subcarrier spacing of 7.5 kHz is applied, the minimum bandwidth of CORESET#0 may be 7.5 kHz * 12 * 24 = 2.16 MHz. Information on the subcarrier spacing for the CORESET#0 may be included in the MIB or PDCCH-ConfigSIB1 of the MIB and transferred. For example, the information on the subcarrier spacing may include at least one of information, such as information indicating whether or not the subcarrier spacing of SSB and the subcarrier spacing of CORESET#0 are the same (e.g., indicating whether they are identical using 1-bit information), and information of multiple relationship (indicating a multiple relationship such as 1/2, 1, 2, 4 times, etc. using n-bit information).

A base station according to an embodiment of the disclosure may identify (obtain) a frequency bandwidth of a frequency band to be operated in the base station. When the frequency bandwidth is less than a specific threshold or equal to or less than a specific threshold, the base station may generate and transmit channels and signals by using a subcarrier spacing having a size smaller than 15 kHz (e.g., 7.5 kHz). In addition, a base station according to an embodiment of the disclosure may identify a frequency band to be operated in the base station. When the identified frequency band is a specific frequency band (e.g., band 8) or equal to or less than a preconfigured bandwidth (e.g., a band for supporting a bandwidth of 5 MHz or less), channels and signals may be generated and transmitted using a subcarrier spacing having a size smaller than 15 kHz. For example, the base station may generate an SSB based on the determined subcarrier spacing and generate a configuration for CORESET#0.

A terminal according to an embodiment of the disclosure may receive and process channels and signals, which are transmitted using a subcarrier spacing ($\mu$) of 7.5 kHz. For example, the terminal may receive and process channels and signals assuming that a subcarrier spacing of a subcarrier used for transmission of each signal and channel included in the SSB (PSS, SSS, PBCH) is 7.5 kHz. The terminal may determine a subcarrier spacing assumed for reception and processing of SSB (PSS, SSS, PBCH) according to the operating frequency band and/or bandwidth. For example, when a frequency band to be accessed by the terminal corresponds to a specific frequency band (e.g., band 8) or a band supporting a bandwidth equal to or less than a preconfigured bandwidth, the terminal may receive and process signals and data in a corresponding band under an assumption that a subcarrier spacing used in the corresponding band is 7.5 kHz and that a subcarrier spacing of 15 kHz or more is used in other frequency bands. For example, when the frequency band corresponds to a specific frequency band (e.g., band 8) or a band supporting a bandwidth equal to or less than a preconfigured bandwidth, the terminal may receive the SSB assuming that the subcarrier spacing of the SSB is 7.5 kHz (not limited to 7.5 kHz, a subcarrier spacing smaller than 7.5 kHz may be used) and, when the SSB is successfully processed, the terminal may identify (obtain) a resource of CORESET#0 assuming that the subcarrier spacing of the CORESET#0 resource is 7.5 kHz (not limited to 7.5 kHz, a subcarrier spacing smaller than 7.5 kHz may be used). The subcarrier spacing of CORESET#0 may follow the subcarrier spacing of the SSB, or may be determined based on information about a subcarrier spacing for CORESET#0 included in the MIB.

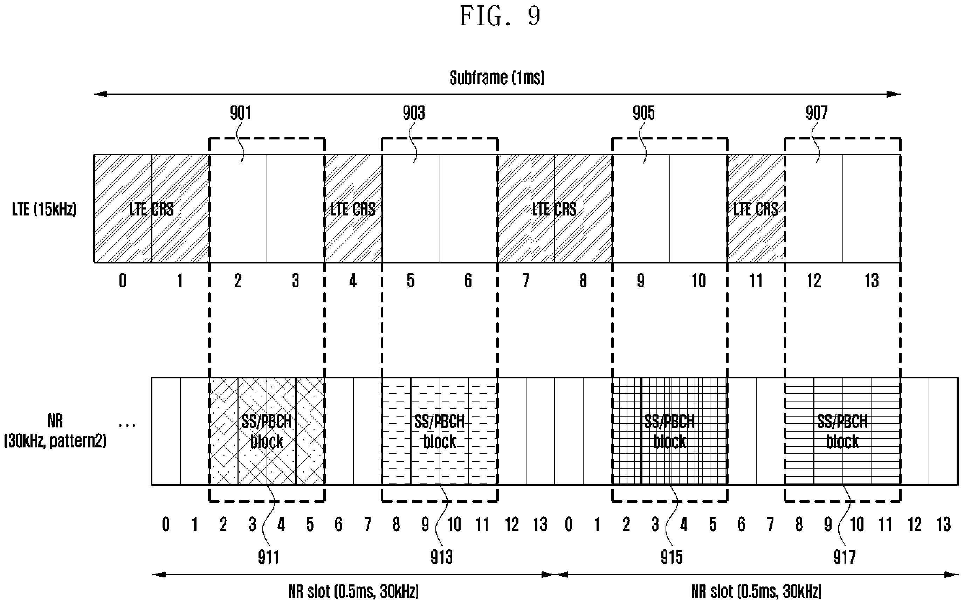

FIG. 9 illustrates symbols, in a slot, to which a single SS/PBCH block is mapped according to an embodiment of the disclosure.

Referring to FIG. 9, an example of a conventional LTE system using a subcarrier spacing of 15 kHz and an NR system using a subcarrier spacing of 30 kHz are shown, and SS/PBCH blocks 911, 913, 915, and 917 of the NR system are designed to be transmitted at locations 901, 903, 905, and 907 to avoid cell-specific reference signals (CRS) that are always transmitted in the LTE system. The design may be established in order to allow an LTE system and an NR system to coexist in a single frequency band.

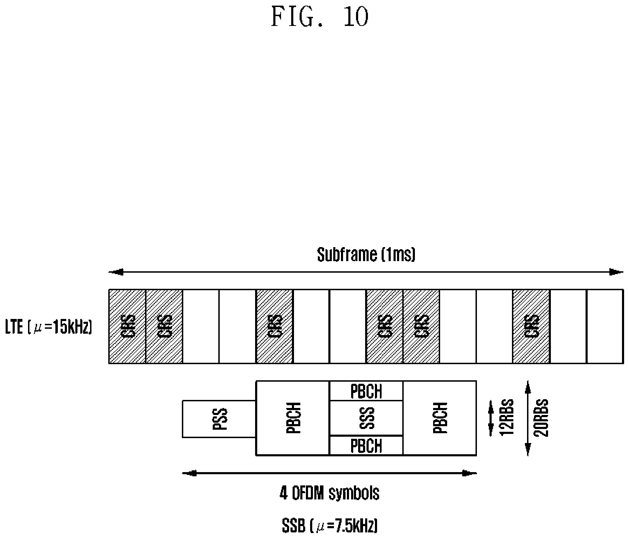

FIG. 10 illustrates a problem caused by different subcarrier spacings in different communication systems according to an embodiment of the disclosure.

Referring to FIG. 10, it may be identified that an SSB and a CRS of LTE overlap, in case of using a subcarrier spacing of 15 kHz in LTE, and in case of using a subcarrier smaller than 15 kHz (e.g., 7.5 kHz) according to an embodiment of the disclosure. The CRS is transmitted in the 0th, 1st, 4th, 7th, 8th, and 11th OFDM symbols of every subframe of an LTE carrier. Although the CRS and the SSB do not overlap in the embodiment of FIG. 9, when small subcarrier spacing is used in the embodiment of FIG. 10, a problem may occur such that the CRS and SSB may overlap in some symbols.

According to an embodiment of the disclosure, in order to solve the above problem, in a symbol in which the SSB overlaps the CRS, the SSB may not be mapped in a resource to which the CRS is mapped. The NR base station may puncture a resource to which the CRS is mapped, and may map an SSB in a resource to which the CRS is not mapped. To this end, the LTE base station and the NR base station operating the corresponding band may provide each other with information on a resource through which the SSB is transmitted and a resource through which the CRS is transmitted, which may be used to resolve resource overlap issues.

In addition, according to an embodiment of the disclosure, in order to solve the above problem, in a resource to which an SSB is mapped, an LTE base station may not transmit a CRS. Since the LTE base station does not transmit a CRS in a specific frequency band of a specific symbol, the problem of overlapping CRS and SSB may be solved. To this end, the LTE base station and NR base station operating the band may provide each other with information on a resource through which SSB is transmitted and a resource through which CRS is transmitted, which may be used to solve the problem of overlapping resources between SSB and CRS.

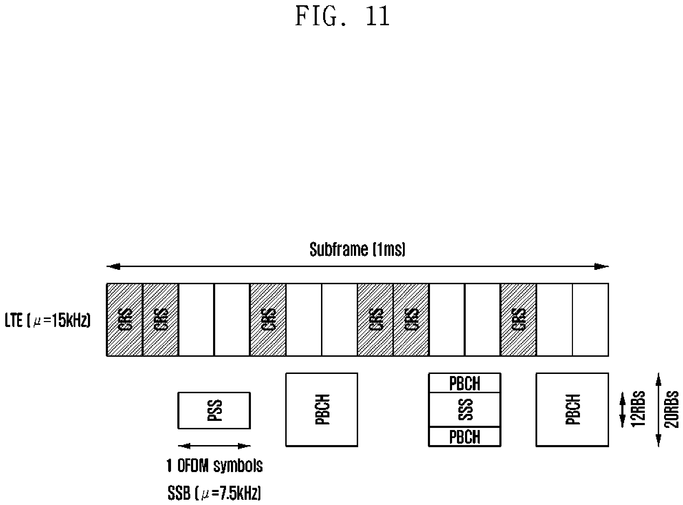

In addition, in order to solve the above problem, the SSB structure may be partially adjusted. An embodiment of adjusting the SSB structure will be described with reference to FIG. 11.

FIG. 11 illustrates a structure of a discontinuous SSB according to an embodiment of the disclosure.

Referring to FIG. 11, PSS, PBCH, and SSS of SSB are not mapped to consecutive symbols, but may be configured to be mapped to discontinuous symbols within one slot. That is, referring to the SSB structure of FIG. 7, the SSB in NR basically consists of 4 consecutive OFDM symbols. However, as described in FIG. 10, in order to solve a problem caused by a change in subcarrier spacing, SSBs may be configured to be mapped to discontinuous symbols instead of consecutive symbols. Although the order in which PSS, PBCH, SSS, and PBCH are mapped in OFDM symbols is maintained in the embodiment of FIG. 11, when discontinuous SSBs are configured, the SSB may be configured by changing the mapping order of PSS, SSS, and PBCH without limiting the structure of the SSB thereto.

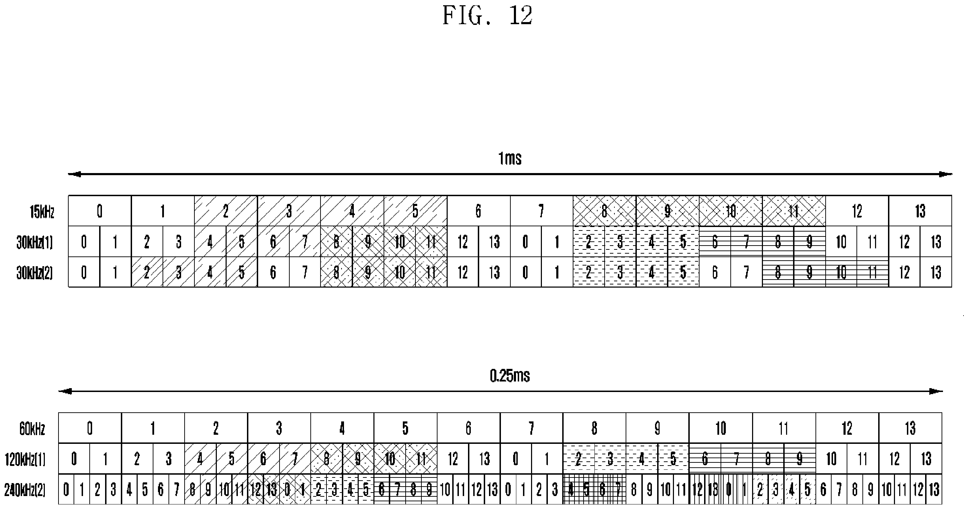

FIG. 12 illustrates a symbol in which an SS/PBCH block may be transmitted according to a subcarrier spacing according to an embodiment of the disclosure.

Referring to FIG. 12, the subcarrier spacing may be configured as 15 kHz, 30 kHz, 120 kHz, 240 kHz, and the like, and the position of a symbol, in which the SS/PBCH block (or SSB block) may be located, may be determined according to each subcarrier spacing. FIG. 12 shows the position of a symbol in which an SSB according to a subcarrier spacing in symbols within 1 ms may be transmitted, and in a region indicated in FIG. 12, the SSB does not always need to be transmitted. Accordingly, the position where the SSB block is transmitted may be configured for a terminal through system information or dedicated signaling.

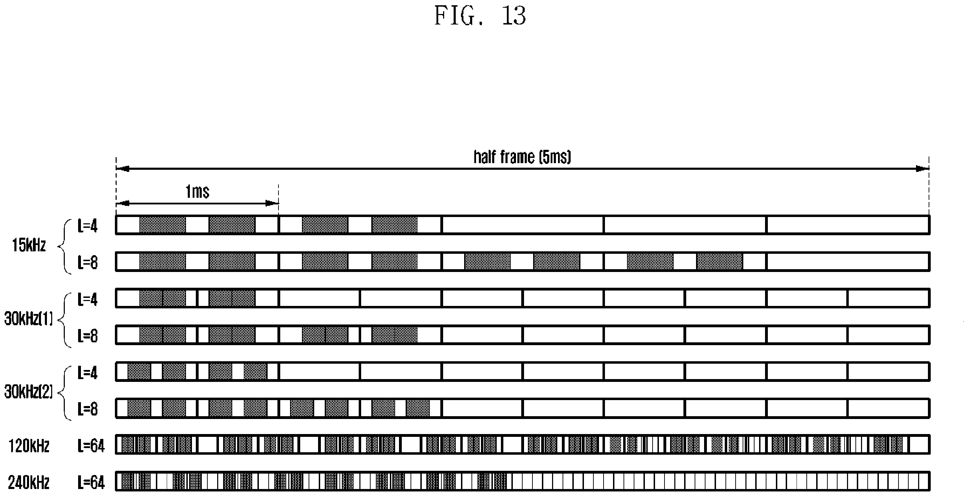

FIG. 13 is another diagram illustrating a symbol in which an SS/PBCH block may be transmitted according to a subcarrier spacing according to an embodiment of the disclosure.

Each of one or more SSB(s) transmitted during one half-frame (5 msec) through the 5G communication system may have an index of 0 to $L_{max-1}$ in ascending order. $L_{max}$ may refer to the maximum number of transmittable SSBs, which may be defined for each band (band-specific). For example, the maximum number of transmittable SSBs may be equal to 4 in a band of 3 GHz or less, 8 in a band of 3 to 6 GHz, and 64 in a band of 6 GHz or more.

Referring to FIG. 13, the subcarrier spacing may be configured as 15 kHz, 30 kHz, 120 kHz, 240 kHz, etc., and the position of a symbol where an SS/PBCH block (or SSB block) may be located may be determined according to each subcarrier spacing. FIG. 13 shows positions of symbols in which SSB blocks may be transmitted according to subcarrier spacings in symbols within 5 ms, and the positions where the SSB blocks are transmitted may be configured for a terminal through system information or dedicated signaling. In a region where the SS/PBCH block may be transmitted, the SS/PBCH block does not always need to be transmitted, and may be transmitted or not according to the selection of a base station. Accordingly, the location where the SSB block is transmitted may be configured for the terminal through system information or dedicated signaling.

According to various embodiments of the disclosure, in case that a subcarrier spacing having a size smaller than 15 kHz is used, for example, 7.5 kHz is used as a subcarrier spacing of an SSB, if Lmax is the same, the proportion of symbols occupied by the SSB within a half frame may increase twice as large as the case where the subcarrier spacing is 15 kHz. In this case, most of the half frame is used for SSB transmission and thus may cause a problem.

Therefore, according to an embodiment of the disclosure, when a subcarrier spacing having a size smaller than 15 kHz is used, the Lmax value may be configured to have a value smaller than 4. For example, a value of 1 or 2 may be used as the Lmax value. In this case (when a subcarrier spacing smaller than 15 kHz is used, for example, when 7.5 kHz is used), the maximum number of SSBs transmittable within a half frame may be 1 or 2.

According to an embodiment of the disclosure, the Lmax value may be determined based on a bandwidth of a frequency band and/or a carrier. For example, when the bandwidth of a carrier is smaller than a preconfigured threshold (e.g., smaller than 5 MHz, smaller than 4 MHz, etc.), 1 or 2 may be used as the Lmax value. In addition, when the frequency band is a preconfigured band (e.g., band 8 or a band using a bandwidth less than a preconfigured bandwidth), 1 or 2 may be used as the Lmax value.

The base station and/or the terminal may determine and use an Lmax value suitable for the subcarrier spacing by using the method described above.

Next, a periodicity of SSB mapped on a time axis according to various embodiments of the disclosure will be described.

A terminal of the 5G communication system may operate assuming that SSB transmission has a period of 2 frames (20 msec) in an initial cell selection process. In addition, after initial access, the base station may provide the terminal with the periodicity of the SSB transmitted from the serving cell through higher layer signaling (e.g., RRC signaling, MAC CE, etc.). Table 4 below shows information included in an ServingCellConfigCommon IE (Information Element), and the SSB-periodicity may be provided to the terminal by using a value of ssb-periodicityServingCell included in the ServingCellConfigCommon IE. When a ssb-periodicityServingCell parameter is not included in the IE, the terminal may understand/assume the SSB-periodicity as a value of ms5 (5 msec).

[Table 4]

```
ingCellConfigCommon ::=           SEQUENCE {
hysCellId                                                    PhysCellId
IONAL,    -- Cond HOAndServCellAdd,
lownlinkConfigCommon                          DownlinkConfigCommon
IONAL,    -- Cond HOAndServCellAdd
plinkConfigCommon                               UplinkConfigCommon
IONAL,    -- Need M
upplementaryUplinkConfig                      UplinkConfigCommon
IONAL,    -- Need S
-TimingAdvanceOffset             ENUMERATED { n0, n25600, n39936 }
IONAL,    -- Need S
sb-PositionsInBurst              CHOICE {
    shortBitmap                  BIT STRING (SIZE (4)),
    mediumBitmap                 BIT STRING (SIZE (8)),
    longBitmap                   BIT STRING (SIZE (64))

IONAL, -- Cond AbsFreqSSB
sb-periodicityServingCell        ENUMERATED { ms5, ms10, ms20, ms40,
), ms160, spare2, spare1 }    OPTIONAL, -- Need S
lmrs-TypeA-Position              ENUMERATED {pos2, pos3},
te-CRS-ToMatchAround             SetupRelease { RateMatchPatternLTE-CRS
                    OPTIONAL, -- Need M
ateMatchPatternToAddModList                   SEQUENCE    (SIZE
axNrofRateMatchPatterns)) OF RateMatchPattern   OPTIONAL, -- Need N
```

```
ateMatchPatternToReleaseList                              SEQUENCE    (SIZE
axNrofRateMatchPatterns)) OF RateMatchPatternId OPTIONAL, -- Need N
sbSubcarrierSpacing                                      SubcarrierSpacing
IONAL, -- Cond HOAndServCellWithSSB
dd-UL-DL-ConfigurationCommon              TDD-UL-DL-ConfigCommon
IONAL, -- Cond TDD
s-PBCH-BlockPower              INTEGER (-60..50),

..,
[
hannelAccessMode-r16              CHOICE {
    dynamic                       NULL,
    semiStatic                    SemiStaticChannelAccessConfig-r16


IONAL, -- Cond SharedSpectrum
iscoveryBurstWindowLength-r16         ENUMERATED {ms0dot5, ms1, ms2,
 ms4, ms5}                     OPTIONAL, -- Need R
sb-PositionQCL-r16                       SSB-PositionQCL-Relation-r16
IONAL, -- Cond SharedSpectrum
ighSpeedConfig-r16                        HighSpeedConfig-r16
IONAL   -- Need R
]
```

Similarly, the SSB periodicity may be provided to the terminal by using the value of ssb-PeriodicityServingCell included in the ServingCellConfigCommonSIB IE. Table 5 shows information included in the ServingCellConfigCommonSIB IE.

[Table 5]

```
ngCellConfigCommonSIB ::=       SEQUENCE {
```

```
lownlinkConfigCommon                DownlinkConfigCommonSIB,
iplinkConfigCommon                            UplinkConfigCommonSIB
IONAL, -- Need R
upplementaryUplink                            UplinkConfigCommonSIB
IONAL, -- Need R
h-TimingAdvanceOffset          ENUMERATED { n0, n25600, n39936 }
IONAL, -- Need S
sb-PositionsInBurst          SEQUENCE {
    inOneGroup                    BIT STRING (SIZE (8)),
    groupPresence                      BIT  STRING  (SIZE  (8))
IONAL   -- Cond FR2-Only

,
sb-PeriodicityServingCell     ENUMERATED  {ms5, ms10, ms20, ms40,
), ms160},
dd-UL-DL-ConfigurationCommon          TDD-UL-DL-ConfigCommon
IONAL, -- Cond TDD
s-PBCH-BlockPower             INTEGER (-60..50),

.,
[
hannelAccessMode-r16          CHOICE {
    dynamic                   NULL,
    semiStatic                SemiStaticChannelAccessConfig-r16

IONAL, -- Cond SharedSpectrum
liscoveryBurstWindowLength-r16        ENUMERATED  {ms0dot5,  ms1,  ms2,
 ms4, ms5}         OPTIONAL, -- Need R
iighSpeedConfig-r16                        HighSpeedConfig-r16
IONAL   -- Need R
]
```

The minimum periodicity value of the SSB that may be configured through the ssb-PeriodicityServingCell is 5 msec. When the SSB is transmitted with a periodicity of 5 msec when $\mu$ = 7.5 kHz, a problem such that many time resources are allocated to the SSB may occur (when $L_{max}$ =4, SSB occupies 4 msec).

Therefore, according to an embodiment of the disclosure, some of values (e.g., ms5) among the minimum values of the transmission periodicity of an SSB configured and transmitted by the base station (ServingCellConfigCommon, ServingCellConfigCommonSIB), may not be allowed when the subcarrier spacing used in the SSB is 7.5 kHz or smaller. That is, when the subcarrier spacing of the SSB according to an embodiment of the disclosure is 7.5 kHz (or a value smaller than 7.5 kHz), the base station may configure, as the transmission periodicity of the SSB, one of values (e.g., ms10, ms20, ms40, ms80, ms160) other than some values (e.g. ms5) among the existing values, and transmit the same. That is, the configurable minimum transmission periodicity of the SSB may be 10 ms or greater. When ssb-periodicityServingCell (or ssb-PeriodicityServingCell) is omitted, a default value may be 10 ms or a value greater than 10 ms.

According to an embodiment of the disclosure, a terminal, which has received a ServingCellConfigCommon (or ServingCellConfigCommonSIB) IE in which the ssb-periodicityServingCell (or ssb-PeriodicityServingCell) parameter is missing, may understand/assume the periodicity of the SSB as a specific value when the subcarrier spacing used in the SSB is 7.5 kHz or less. The specific value may be determined as a minimum value (e.g., ms10) among remaining values other than some excluded values (e.g., ms5) in the embodiment. For example, the specific value may be configured as 10 ms or a value greater than 10 ms.

In addition, a terminal according to an embodiment of the disclosure may operate assuming that, when the subcarrier spacing used in the SSB is 7.5 kHz or smaller, the transmission periodicity of SSB upon initial access has a longer period (e.g., 40 msec, 4 frames) rather than 2 frames.

Next, timing-related parameters according to various embodiments of the disclosure are defined. In case that a subcarrier spacing smaller than 15 kHz is used according to various embodiments of the disclosure, timing-related parameters may need to be changed to support this case.

In the 5G communication system, a time required for processing each of the various channels is defined. The time required for the processing is defined for each channel by a UE capability and numerology (subcarrier spacing $\mu$).

A time ($N_2$) required for preparation of a physical uplink shared channel (PUSCH) may be defined for each UE capability and numerology (subcarrier spacing $\mu$), as shown in Table 6 (Table 1 in case of PUSCH preparation time for PUSCH timing capability 1) and

Table 7 (Table 2 in case of PUSCH preparation time for PUSCH timing capability 2) below.

[Table 6]

| | CH preparation time $N_2$ [symbols] |
|---|---|
| | |
| | |
| | |
| | |

[Table 7]

| | CH preparation time $N_2$ [symbols] |
|---|---|
| | |
| | |
| | or frequency range 1 |

Although not expressed in Table 6 and Table 7 above, when a subcarrier spacing smaller than 15 kHz is used,

an additional $N_2$ value that is equal to or smaller than a preconfigured value may be used, for example, the $N_2$ value that is equal to or smaller than that of the case in which the subcarrier spacing is 15 kHz may be used. According to an embodiment of the disclosure, when $\mu$ = 7.5 kHz ($\mu$ = -1), a PUSCH preparation time ($N_2$) for PUSCH timing capability 1 may be determined as one of values included in [$N_{2,min,cap1}$, 10], one of values included in [$N_{2,min,cap1}$, 10), one of values included in ($N_{2,min,cap1}$, 10], or one of values included in ($N_{2,min,cap1}$, 10). Further, according to an embodiment of the disclosure, when $\mu$ =7.5 kHz ($\mu$ = -1), a PUSCH preparation time ($N_2$) for PUSCH timing capability 2 may be determined as one of values included in [$N_{2,min,cap2}$, 5], one of values included in [$N_{2,min,cap2}$, 5), one of values included in ($N_{2,min,cap2}$, 5], or one of values included in ($N_{2,min,cap2}$, 5).

The terminal and/or the base station may process the PUSCH by using the PUSCH preparation time determined as described above.

A time ($N_1$) required for a processing procedure of a physical downlink shared channel (PDSCH) is defined for each UE capability and numerology (subcarrier spacing $\mu$), as shown in Table 8 (in case of PDSCH processing time for PDSCH processing capability 1) and Table 9 (in case of PDSCH processing time for PDSCH processing capability 2).

[Table 8]

| | CH decoding time $N_1$ [symbols] | |
|---|---|---|
| | *-AdditionalPosition = 'pos0' in RS-DownlinkConfig in both of -DownlinkForPDSCH-pingTypeA, dmrs-nlinkForPDSCH-MappingTypeB* | *-AdditionalPosition ≠ 'pos0' in RS-DownlinkConfig in either of -DownlinkForPDSCH-pingTypeA, dmrs-nlinkForPDSCH-MappingTypeB r the higher layer parameter is not igured* |
| | | |
| | | |
| | | |
| | | |

[Table 9]

| CH decoding time $N_1$ [symbols] |
|---|
| *-AdditionalPosition* = 'pos0' in *RS-DownlinkConfig* in both of *-DownlinkForPDSCH-MappingTypeA,*      *dmrs-DownlinkForPDSCH-pingTypeB* |
| |
| |
| frequency range 1 |

Although not expressed in Tables 8 and 9 above, when a subcarrier spacing smaller than 15 kHz is used as the subcarrier spacing, an additional $N_1$ value that is equal to or smaller than a preconfigured value may be used, for example, the $N_1$ value that is equal to or smaller than that of a case in which the subcarrier spacing is 15 kHz may be used. According to an embodiment of the disclosure, when $\mu$ = 7.5 kHz ($\mu$ = -1), a PDSCH processing time ($N_1$) for PDSCH processing capability 1 may be determined as one of values included in $[N_{1,min,cap1}, 8]$, one of values included in $[N_{1,min,cap1}, 8)$, one of values included in $(N_{1,min,cap1}, 8]$, or one of values included in $(N_{1,min,cap1}, 8)$. Further, according to an embodiment of the disclosure, when $\mu$ =7.5 kHz ($\mu$ = -1), a PDSCH processing time ($N_1$) for PDSCH processing capability 2 may be determined as one of values included in $[N_{1,min,cap2}, 3]$, one of values included in $[N_{1,min,cap2}, 3)$, one of values included in $(N_{1,min,cap2}, 3]$, or one of values included in $(N_{1,min,cap2}, 3)$.

The terminal and/or the base station may process the PDCCH by using the PDCCH processing time determined as above.

A PDSCH reception preparation time ($N_{pdsch}$) when a physical downlink control channel (PDCCH) and a PDSCH have different numerologies (subcarrier spacing $\mu$) and a carrier through which the PDCCH is transmitted differs from a carrier through which the PDSCH is transmitted (i.e., cross-carrier scheduling) is defined for each numerology (subcarrier spacing $\mu$) as shown in Table 10 ($N_{pdsch}$ as a function of the subcarrier spacing of the scheduling PDCCH).

[Table 10]

| $\mu_{PDCCH}$ | $N_{pdsch}$ [symbols] |
|---|---|
| 0 | 4 |
| 1 | 5 |
| 2 | 10 |
| 3 | 14 |

Although not expressed in Table 10, when a subcarrier spacing smaller than 15 kHz is used as the subcarrier spacing, an additional $N_{PDSCH}$ value that is equal to or smaller than a preconfigured value may be used, for example, the $N_{PDSCH}$ value that is equal to or smaller than that of a case in which the subcarrier spacing is 15 kHz may be used. According to an embodiment of the disclosure, a PDSCH reception preparation time ($N_{pdsch}$) when a physical downlink control channel (PDCCH) and a PDSCH have different numerologies (subcarrier spacing $\mu$= 7.5 KHz, $\mu$ = -1), and a carrier through which the PDCCH is transmitted differs from a carrier through which the PDSCH is transmitted (i.e., cross-carrier scheduling) may be determined as one of values included in $[N_{PDSCH,min}, 4]$, one of values included in $[N_{PDSCH,min}, 4)$, one of values included in $(N_{PDSCH,min}, 4]$, or one of values included in $(N_{PDSCH,min}, 4)$.

As such, according to various embodiments of the disclosure, as a new subcarrier spacing is used (e.g., $\mu$ =7.5kHz ($\mu$ = -1)), timing-related parameters ($N_2$, Ni, $N_{pdsch}$) may be newly defined, and the newly defined values may be equal to or smaller than the corresponding values ($N_2$, Ni, $N_{pdsch}$), respectively, of a case in which the subcarrier spacing is 15 kHz ($\mu$ = 0), and may have a value of a rational number greater than a specific value (a specific value is greater than zero).

In addition, according to various embodiments of the disclosure, new values may be defined for various parameters defined in Table 11 according to the use of a new subcarrier spacing (explained based on 7.5 kHz, but not limited thereto).

[Table 11]

mber of MIMO layers: (maximum) number of MIMO layers to be supported (or

ortable) by a carrier that supports 7.5kHz ($\mu$ = -1)

'S : MCS (maximum value) to be supported (or supportable) by a carrier that supports

Hz ($\mu$ = -1)

ximum Transport Block Size (TBS) value

mber of subcarriers: Maximum number of subcarriers in a carrier that supports

Hz ($\mu$ = -1)

---

nether to use the same (different) numerology (different BWP, different carrier)

een PDCCH and PDSCH/PUSCH

mber of blind decoding: Blind decoding configuration on a carrier that supports

Hz ($\mu$ = -1) (maximum number of blind decoding, maximum number of configurable

l decoding)

IRS configuration(whether to configure front loaded DMRS or additional DMRS)

k data rate

-mapping

eduling method (14-symbol slot-based scheduling)

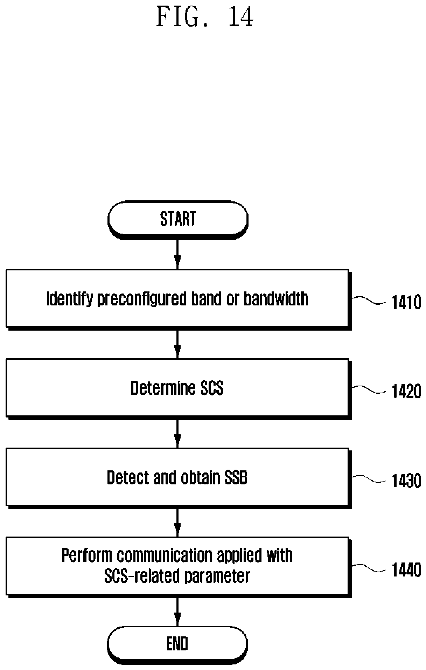

FIG. 14 illustrates an operation of a terminal according to various embodiments of the disclosure.

In operation 1410, the terminal may identify whether a band to be accessed by the terminal is a preconfigured band or whether the size of a frequency band to access is smaller than a preconfigured bandwidth. For example, the terminal may identify whether the preconfigured band is a specific band (e.g., band 8) using a small bandwidth or whether a preconfigured bandwidth (e.g., a bandwidth less than 5 MHz) is used. Alternatively, when the terminal is configured to access only a preconfigured band according to a configuration of the terminal or the type of terminal, or when the terminal is configured to use a bandwidth less than a preconfigured bandwidth, the terminal may determine that the condition of operation 1410 is satisfied.

When it is determined that a preconfigured band or a bandwidth less than a preconfigured bandwidth is used in operation 1410, the terminal may determine that an SCS smaller than a preconfigured SCS should be used in the corresponding band in operation 1420. For example, the preconfigured SCS may be 15 kHz, and the SCS smaller than 15 kHz may be 7.5 kHz, 3.75 kHz, and the like.

In operation 1430, the terminal may obtain or detect an SSB assuming that the SSB transmitted by a base station is generated and transmitted by considering an SCS smaller than the preconfigured SCS. For a specific configuration of the SSB, the configuration of the SSB according to various embodiments of the disclosure is referred to. In addition, the terminal may receive a configuration of a resource for CORESET#0 by using a smaller SCS than the preconfigured SCS, and may identify the same.

In operation 1440, the terminal may perform communication with the base station. The terminal may control transmission and reception of a data channel by applying a processing time considering an SCS of a frequency band operated by the terminal itself. For specific examples of processing time, the configuration of processing time according to various embodiments of the disclosure is referred to.

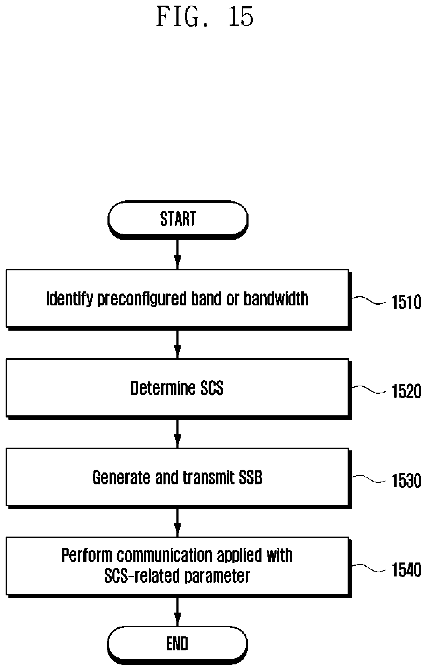

FIG. 15 illustrates an operation of a base station according to various embodiments of the disclosure.

In operation 1510, the base station may identify whether a band to be operated by the base station itself is a preconfigured band or whether the size of a frequency band to be operated is smaller than a preconfigured bandwidth. For example, the base station may identify whether the preconfigured band is a specific band (e.g., band 8) using a small bandwidth or whether a preconfigured bandwidth (e.g., a bandwidth less than 5 MHz) is used.

When it is determined that a preconfigured band or a bandwidth less than a preconfigured bandwidth is used in operation 1510, the base station may determine that an SCS smaller than a preconfigured SCS should be used in the corresponding band in operation 1520. For example, the preconfigured SCS may be 15 kHz, and the SCS smaller than 15 kHz may be 7.5 kHz, 3.75 kHz, and the like.

In operation 1530, the base station may generate and transmit an SSB. The base station may generate or configure an SSB for an SCS smaller than a preconfigured SCS. For a specific configuration of the SSB, the configuration of the SSB according to various embodiments of the disclosure is referred to. In addition, the base station may establish a configuration for CORESET#0 by using an SCS smaller than the preconfigured SCS.

In operation 1540, the base station may communicate with at least one terminal. The base station may control transmission and reception of a data channel by applying a processing time considering an SCS of a frequency band operated by the base station itself. For specific examples of processing time, the configuration of processing time according to various embodiments of the disclosure is referred to.

Hereinafter, the first to fourth embodiments proposed in the disclosure will specifically describe methods for supporting a small bandwidth in NR. In the first to fourth embodiments described below, the small bandwidth may signify that a channel bandwidth for uplink or downlink that may be used corresponding to each frequency band in NR frequency range (FR) 1 (e.g., 410 MHz to 7125 MHz) is a bandwidth smaller than a specific bandwidth, e.g., 5 MHz.

<First Embodiment>

One control resource set (CORESET) may consist of $N_{\text{RB}}^{\text{CORESET}}$ RBs in a frequency domain and $N_{\text{symb}}^{\text{CORESET}} \in \{1,2,3\}$ symbols in a time domain. One control-channel element (CCE) consists of six resource-element groups (REGs), and one REG may consist of one RB during one OFDM symbol. REGs within a CORESET may be numbered in an increasing order in a time-first frequency-next manner, starting with 0 for the first symbol and the lowest-numbered RB in the CORESET. A terminal may be configured with a plurality of CORESETs, and each CORESET may be associated with one CCE-to-REG mapping only (interleaved or non-interleaved). The CCE-to-REG mapping for a CORESET may be interleaved or non-interleaved, and interleaving may be performed in units of REG bundles. A REG bundle consists of L REGs (i.e., L represents the REG bundle size), and a REG bundle $i(i = 0,1, ..., N_{REG}^{\text{CORESET}}/L - 1)$ may consist of {iL, iL + 1, ..., iL + L - 1} REGs. The number of REGs $N_{\text{REG}}^{\text{CORESET}}$ included in one CORESET may be $N_{\text{REG}}^{\text{CORESET}} = N_{\text{RB}}^{\text{CORESET}} N_{\text{symb}}^{\text{CORESET}}$. CCE *j* consists of REG bundles {*f*(6*j*/L),*f*(6*j*/L + 1) ...,*f*(6*j*/L + 6/L - 1)}, where f(·) is an interleaver.

For non-interleaved CCE-to-REG mapping, a relationship such that L = 6 and *f(x)* = *x* may be established. For interleaved CCE-to-REG mapping, $L \in \{2,6\}$ for $N_{\text{symb}}^{\text{CORESET}} = 1$, and $L \in \{N_{\text{symb}}^{\text{CORESET}}, 6\}$ for $N_{\text{symb}}^{\text{CORESET}} \in \{2,3\}$, where an interleaver may be defined as in Equation 1. In Equation 1, $R \in \{2,3,6\}$, and the terminal may not expect to receive and handle a configuration causing a value of C to be non-integer number.

[Equation 1]

$$f(x) = (rC + c + n_{\text{shift}}) \bmod \left(N_{\text{REG}}^{\text{CORESET}}/L\right)$$

$$x = cR + r$$

$$r = 0, 1, \dots, R - 1$$

$$c = 0, 1, \dots, C - 1$$

$$C = N_{\text{REG}}^{\text{CORESET}}/(LR), R \in \{2, 3, 6\}$$

A ControlResourceSet IE configured by downlink signaling (e.g., RRC, SIB, MIB, etc.) may be used to configure a time/frequency control resource set (CORESET) to retrieve downlink control information. For CORESET configured by ControlResourceSet IE, (i) $N_{\text{RB}}^{\text{CORESET}}$ is given by the higher-layer parameter frequencyDomainResources, and (ii) $N_{\text{symb}}^{\text{CORESET}}$ is given by the higher-layer parameter duration, (iii) whether to interleave is given by the higher-layer parameter cce-REG-MappingType, (iv) L is 6 in case of non-interleaved mapping, and is given by the higher-layer parameter reg-BundleSize in case of interleaved mapping, (v) R is given by the higher-layer parameter interleaverSize, and (vi) $n_{\text{shift}} \in \{0, 1, \dots, 274\}$ may be given by shiftIndex (if not, $n_{\text{shift}} = N_{\text{ID}}^{\text{cell}}$). In addition, in both interleaved and non-interleaved cases, the terminal may assume that the same precoding is used within the REG bundle when the higher-layer parameter precoderGranularity has a value of sameAsREG-bundle, and may assume that the same precoding is used in all REGs existing in a set of contiguous RBs in a CORESET when the precoderGranularity has a value of allContiguousRBs.

ControlResourceSetZero IE configured by downlink signaling (e.g., RRC, SIB, MIB, etc.) may be used to configure CORESET (e.g., CORESET #0) of an initial BWP. In a case of a CORESET (e.g., CORESET #0) configured by ControlResourceSetZero IE, (i) $N_{\text{RB}}^{\text{CORESET}}$ and $N_{\text{symb}}^{\text{CORESET}}$ are determined as a value mapped to one index' of one table among tables <12-1> to <12-10> indicated by a value of ControlResourceSetZero, (ii) L may be determined as 6, R may be determined as 2, and $n_{\text{shift}}$ may be determined as $N_{\text{ID}}^{\text{cell}}$, (iii) the terminal may perform processing by assuming that a normal cyclic prefix (CP) is used in CORESET#0 configured via MIB or SIB1, (iv) interleaved mapping is used, and (v) the same precoding is used within a REG bundle.

[Table 12-1]

**Table 12-1: Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz**

| x | BCH block and CORESET iplexing pattern | iber of RBs ESET | iber of bols $N_{\text{symb}}^{CORESE}$ | et (RBs) |
|---|---|---|---|---|
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | rved | | | |

[Table 12-1A]

Table 12-1A: Set of resource blocks and slot symbols of CORESET for Type0-PDCCH search space set when {SS/PBCH block, PDCCH} SCS is {15, 15} kHz for frequency bands operated with shared spectrum channel access

| x | BCH block and CORESET iplexing pattern | iber of RBs RESET | iber of Symbols RESET b | et (RBs) |
|---|---|---|---|---|
| | | | | |
| | | | | |
| | | | | |
| | | | | |
| | | | | |
| | | | | |
| | | | | |
| | | | | |
| | rved | | | |
| | rved | | | |
| | rved | | | |
| | rved | | | |
| | rved | | | |
| | rved | | | |
| | rved | | | |
| | rved | | | |

[Table 12-2]

**Table 12-2: Set of resource blocks and slot symbols of CORESET for Type0-PDCCH search space set when {SS/PBCH block, PDCCH} SCS is {15, 30} kHz for frequency bands with minimum channel bandwidth 5 MHz or 10 MHz**

| x | BCH block and CORESET iplexing pattern | ber of RBs ESET | ber of bols $N_{symb}^{CORESET}$ | et (RBs) |
|---|---|---|---|---|
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  | rved |  |  |  |
|  | rved |  |  |  |

[Table 12-3]

**Table 12-3: Set of resource blocks and slot symbols of CORESET for Type0-PDCCH search space set when {SS/PBCH block, PDCCH} SCS is {30, 15} kHz for frequency bands with minimum channel bandwidth 5 MHz or 10 MHz**

| x | BCH block and CORESET iplexing pattern | iber of RBs ESET | iber of bols $N_{symb}^{CORESET}$ | et (RBs) |
|---|---|---|---|---|
| | | | | |
| | | | | |
| | | | | |
| | | | | |
| | | | | |
| | | | | |
| | | | | |
| | | | | |
| | | | | |
| | rved | | | |
| | rved | | | |
| | rved | | | |
| | rved | | | |
| | rved | | | |
| | rved | | | |
| | rved | | | |

[Table 12-4]

**Table 12-4: Set of resource blocks and slot symbols of CORESET for Type0-PDCCH search space set when {SS/PBCH block, PDCCH} SCS is {30, 30} kHz for frequency bands with minimum channel bandwidth 5 MHz or 10 MHz**

| x | BCH block and CORESET iplexing pattern | iber of RBs ESET | iber of bols $N_{symb}^{CORESET}$ | et (RBs) |
|---|---|---|---|---|
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |

[Table 12-4A]

Table 12-4A: Set of resource blocks and slot symbols of CORESET for Type0-PDCCH search space set when {SS/PBCH block, PDCCH} SCS is {30, 30} kHz for frequency bands operated with shared spectrum channel access

| x | BCH block and CORESET iplexing pattern | ber of RBs RESET | ber of Symbols RESET b | et (RBs) |
|---|---|---|---|---|
|  |  |  |  |  |
|  |  |  |  |  |
|  |  |  |  |  |
|  |  |  |  |  |
|  |  |  |  |  |
|  |  |  |  |  |
|  |  |  |  |  |
|  |  |  |  |  |
|  | rved |  |  |  |
|  | rved |  |  |  |
|  | rved |  |  |  |
|  | rved |  |  |  |
|  | rved |  |  |  |
|  | rved |  |  |  |
|  | rved |  |  |  |
|  | rved |  |  |  |

[Table 12-5]

**Table 12-5: Set of resource blocks and slot symbols of CORESET for Type0-PDCCH search space set when {SS/PBCH block, PDCCH} SCS is {30, 15} kHz for frequency bands with minimum channel bandwidth 40MHz**

| x | BCH block and RESET multiplexing ern | ber of RBs ESET | ber of Symbols RESE | et (RBs) |
|---|---|---|---|---|
| | | | | |
| | | | | |
| | | | | |
| | | | | |
| | | | | |
| | | | | |
| | | | | |
| | | | | |
| | | | | |
| rved | | | | |
| rved | | | | |
| rved | | | | |
| rved | | | | |
| rved | | | | |
| rved | | | | |
| rved | | | | |

[Table 12-6]

**Table 12-6: Set of resource blocks and slot symbols of CORESET for Type0-PDCCH search space set when {SS/PBCH block, PDCCH} SCS is {30, 30} kHz for frequency bands with minimum channel bandwidth 40MHz**

| x | BCH block and RESET multiplexing rn | ber of RBs ESET | ber of Symbols SET | et (RBs) |
|---|---|---|---|---|
| | | | | |
| | | | | |
| | | | | |
| | | | | |
| | | | | |
| | | | | |
| | | | | |
| | | | | |
| | | | | |
| | | | | |
| | rved | | | |
| | rved | | | |
| | rved | | | |
| | rved | | | |
| | rved | | | |
| | rved | | | |

[Table 12-7]

## Table 12-7: Set of resource blocks and slot symbols of CORESET for Type0-PDCCH search space set when {SS/PBCH block, PDCCH} SCS is {120, 60} kHz

| x | BCH block and CORESET iplexing pattern | ber of RBs ESET | ber of bols $N_{\text{symb}}^{\text{CORESET}}$ | et (RBs) |
|---|---|---|---|---|
| | | | | |
| | | | | |
| | | | | |
| | | | | |
| | | | | |
| | | | | |
| | | | | |
| | | | | |
| | | | | f $k_{\text{SSB}} = 0$ <br> f $k_{\text{SSB}} > 0$ |
| | | | | |
| | | | | f $k_{\text{SSB}} = 0$ <br> f $k_{\text{SSB}} > 0$ |
| | | | | |
| | rved | | | |
| | rved | | | |
| | rved | | | |
| | rved | | | |

[Table 12-8]

**Table 12-8: Set of resource blocks and slot symbols of CORESET for Type0-PDCCH search space set when {SS/PBCH block, PDCCH} SCS is {120, 120} kHz**

| x | BCH block and CORESET iplexing pattern | iber of RBs ESET | iber of bols $N_{symb}^{CORESET}$ | et (RBs) |
|---|---|---|---|---|
| | | | | |
| | | | | |
| | | | | |
| | | | | |
| | | | | f $k_{SSB}=0$ <br> f $k_{SSB} > 0$ |
| | | | | |
| | | | | f $k_{SSB}=0$ <br> f $k_{SSB}>0$ |
| | | | | |
| | rved | | | |
| | rved | | | |
| | rved | | | |
| | rved | | | |
| | rved | | | |
| | rved | | | |
| | rved | | | |
| | rved | | | |

[Table 12-9]

**Table 12-9: Set of resource blocks and slot symbols of CORESET for Type0-PDCCH search space set when {SS/PBCH block, PDCCH} SCS is {240, 60} kHz**

| x | BCH block and CORESET iplexing pattern | ber of RBs ESET | ber of bols $N_{\text{symb}}^{\text{CORESET}}$ | et (RBs) |
|---|---|---|---|---|
|  |  |  |  |  |
|  |  |  |  |  |
|  |  |  |  |  |
|  |  |  |  |  |
|  | rved |  |  |  |
|  | rved |  |  |  |
|  | rved |  |  |  |
|  | rved |  |  |  |
|  | rved |  |  |  |
|  | rved |  |  |  |
|  | rved |  |  |  |
|  | rved |  |  |  |
|  | rved |  |  |  |
|  | rved |  |  |  |
|  | rved |  |  |  |
|  | rved |  |  |  |

[Table 12-10]

**Table 12-10: Set of resource blocks and slot symbols of CORESET for Type0-PDCCH search space set when {SS/PBCH block, PDCCH} SCS is {240, 120} kHz**

| x | BCH block and RESET multiplexing ern | ber of RBs ESET | ber of bols $N_{\text{symb}}^{\text{CORESET}}$ | et (RBs) |
|---|---|---|---|---|
| | | | | |
| | | | | |
| | | | | |
| | | | | f $k_{\text{SSB}} = 0$ <br> f $k_{\text{SSB}} > 0$ |
| | | | | |
| | | | | f $k_{\text{SSB}} = 0$ <br> f $k_{\text{SSB}} > 0$ |
| | | | | |
| | rved | | | |
| | rved | | | |
| | rved | | | |
| | rved | | | |
| | rved | | | |
| | rved | | | |
| | rved | | | |
| | rved | | | |

As described above, according to the current standard, the minimum number of RBs that may be configured with CORESET#0 is 24, and the minimum subcarrier spacing that may be configured is 15 kHz. Therefore, when 15 kHz is used as the subcarrier spacing, the minimum bandwidth of CORESET#0 may have 4.32 MHz (15 kHz * 12 * 24). Bandwidths less than 4.32 MHz (e.g., 3 MHz to 4 MHz, but not limited to this and may be bandwidths less than 3 MHz) may not be operable because their size is smaller than the minimum bandwidth of CORESET#0.

The first embodiment proposes a method for supporting the configuration of CORESET #0 in a small bandwidth. In the first embodiment, the small bandwidth may signify a bandwidth less than 5 MHz. As a specific example, the small bandwidth may signify a bandwidth less than 4.32 MHz, which is the minimum bandwidth of CORESET#0. In addition, a case in which a carrier bandwidth corresponds to a small bandwidth may signify that the carrier bandwidth is smaller than 5 MHz (specific example, 4.32 MHz).

[Method 1]

CORESET#0 may be configured by a higher-layer parameter (e.g., ControlResourceSetZero). According to an embodiment of the disclosure, ' $N_{RB}^{CORESET}$ and $N_{symb}^{CORESET}$ of CORESET (CORESET zero, CORESET#0) for Type0 PDCCH search space set' used in communication of a small bandwidth or a specific frequency band may not be newly defined. That is, even in a small bandwidth or a specific frequency band, one of values of $N_{RB}^{CORESET}$ and $N_{symb}^{CORESET}$ defined in the existing <Table 12-1> to <Table 12-10> for CORESET#0 may be used. In this case, some of the RBs included in CORESET#0 may not be included in a carrier bandwidth. Data mapped to RBs, which are not included in the carrier bandwidth among the RBs included in the CORESET, may not be transmitted. For example, n RBs with a lower index among $N_{RB}^{CORESET}$ RBs included in the CORESET are transmitted, and ( $N_{RB}^{CORESET} - n`$ ) RBs which are not included in the carrier bandwidth may not be transmitted.

[Method 2]

As described above, a terminal receiving and processing a PDCCH in CORESET#0 may process CORESET#0 under an assumption that CCE is mapped to REG in an interleaved mapping method. However, when the CCE-to-REG mapping of CORESET#0 is interleaved in a small bandwidth, a problem may occur in which at least some REG(s) included in one CCE are not included in the carrier bandwidth.

According to an embodiment of the disclosure, ' $N_{RB}^{CORESET}$ and $N_{symb}^{CORESET}$' of CORESET (i.e., CORESET zero, CORESET#0) for Type0 PDCCH search space set' used in communication in a small bandwidth or a specific frequency band are not newly defined, and the CCE-to-REG mapping of CORESET#0 may be non-interleaved.

A base station according to an embodiment of the disclosure may identify (obtain) a frequency bandwidth of a frequency band to be operated in the base station. When the frequency bandwidth is less than a specific threshold or equal to or less than a specific threshold, the base station may not interleave the CCE-to-REG mapping of CORESET#0. For example, the threshold may be 4.32 MHz, which is the minimum bandwidth of CORESET#0.

In addition, a base station according to an embodiment of the disclosure may identify a frequency band to be operated in the base station. (i) When the identified frequency band is a specific frequency band (e.g., band 8) or (ii) when a bandwidth less than (or equal to or less than) a preconfigured bandwidth (e.g., 5 MHz) in the identified frequency band is used, the base station may not interleave the CCE-to-REG mapping of CORESET#0 (non-interleaved).

According to an embodiment of the disclosure, when a channel bandwidth less than a specific threshold or equal to or less than a specific threshold is used in a frequency band to access, the terminal may process a signal assuming that the CCE-to-REG mapping of CORESET#0 is non-interleaved.

According to an embodiment of the disclosure, (i) when a frequency band to access is a specific frequency band (e.g., band 8) or (ii) when a bandwidth less than (or equal to or less than) a preconfigured bandwidth (e.g., 5 MHz) in the frequency band is used, a terminal may process a signal assuming that the CCE-to-REG mapping of CORESET#0 is non-interleaved.

In the above proposed method, an operation has been explained by assuming that the CCE-to-REG mapping of CORESET#0 is non-interleaved. Additionally, a method of notifying, using explicit signaling, the terminal of whether interleaving has been applied to the CCE-to-REG mapping may be considered.

According to an embodiment of the disclosure, ' $N_{RB}^{CORESET}$ and $N_{symb}^{CORESET}$ of CORESET (CORESET zero, CORESET#0) for Type0 PDCCH search space set' used in communication in a small bandwidth or a specific frequency band is not newly defined, and whether the CCE-to-REG mapping of CORESET#0 is interleaved may be signaled to the terminal via MIB and/or SIB 1. For example, when the base station instructs interleaved CCE-to-REG mapping to the terminal, L may be determined as 6, R may be determined as 2, $n_{shift}$ may be determined as $N_{ID}^{cell}$ .

A base station according to an embodiment of the disclosure may identify (obtain) a frequency bandwidth of a frequency band to be operated in the base station. When the frequency bandwidth is less than a specific threshold or equal to or less than a specific threshold, the base station may determine whether to perform interleaving during CCE-to-REG mapping of CORESET#0 based on the identified frequency bandwidth, and may signal, via MIB and/or SIB 1, information indicating the determination to the terminal. In addition, the base station does not perform interleaving of CCE-to-REG mapping (non-interleaved) based on the determination, or in case of performing interleaving (interleaved), the base station may perform interleaving by determining L as 6, R as 2, and , $n_{\text{shift}}$ as $N_{\text{ID}}^{\text{cell}}$ . For example, when the frequency bandwidth is less than a specific threshold or equal to or less than a specific threshold, the base station may determine not to perform interleaving, and may signal information indicating non-interleaved CCE-to-REG mapping to the terminal. As an example, the threshold may be 4.32 MHz, which is the minimum bandwidth of CORESET#0.

In addition, a base station according to an embodiment of the disclosure may identify a frequency band to be operated in the base station. (i) When the identified frequency band corresponds to a specific frequency band (e.g., band 8) or (ii) when a bandwidth less than (or equal to or less than) a preconfigured bandwidth (e.g., 5 MHz) in the identified frequency band is used, the base station may determine whether to perform interleaving during CCE-to-REG mapping of CORESET#0, and the base station may signal information indicating the above determination to the terminal via MIB and/or SIB 1. The base station does not perform interleaving of CCE-to-REG mapping (non-interleaved) based on the determination, or in case of performing interleaving (interleaved), the base station may perform interleaving by determining L as 6, R as 2, and , $n_{\text{shift}}$ as. For example, (i) when the identified frequency bandwidth corresponds to a specific frequency band (e.g., band 8) or (ii) when a bandwidth less than (or equal to or less than) a preconfigured bandwidth (e.g., 5 MHz) in the identified frequency band is used, the base station may determine not to perform interleaving and may signal information indicating non-interleaved CCE-to-REG mapping to the terminal.

According to an embodiment of the disclosure, when a channel bandwidth equal to or less than a specific bandwidth is used in a frequency band to access, the terminal may identify whether interleaving is applied in CCE-to-REG mapping of CORESET#0 based on signaling information received via MIB and/or SIB 1. For example, when it is identified that CCE-to-REG mapping is non-interleaved based on the signaling information, the terminal may perform processing a signal by determining that CCE-to-REG mapping of CORESET#0 is non-interleaved.

According to an embodiment of the disclosure, (i) when a frequency band to access is a specific frequency band (e.g., band 8) or (ii) when a bandwidth less than (or equal to or less than) a preconfigured bandwidth (e.g., 5 MHz) in the frequency band is used, the terminal may identify whether interleaving is applied in CCE-to-REG mapping of CORESET#0 based on signaling information received via MIB and/or SIB 1. For example, when it is identified that CCE-to-REG mapping is interleaved based on the signaling information, the terminal may perform processing by determining L as 6, R as 2, and , $n_{\text{shift}}$ as $N_{\text{ID}}^{\text{cell}}$ . When it is identified that the CCE-to-REG mapping is non-interleaved based on the signaling information, the terminal may process a signal by determining that the CCE-to-REG mapping of CORESET #0 is non-interleaved.

[Method 3]

Meanwhile, when CCE-to-REG mapping of CORESET#0 is interleaved, in order to solve the problem that at least some REG(s) included in one CCE are not included in a bandwidth of a carrier, an interleaving method different from the existing method may be considered.

According to an embodiment of the disclosure, '$N_{\text{RB}}^{\text{CORESET}}$ and $N_{\text{symb}}^{\text{CORESET}}$ of CORESET (CORESET zero, CORESET#0) for TypeO PDCCH search space set' used in communication in a small bandwidth or a specific frequency band may not be newly defined, and the CCE-to-REG mapping of CORESET#0 may be interleaved according to a method different from the above-described method (e.g., Equation 1). For example, only RBs that may be included within the small bandwidth (e.g., 12 or 18 RBs starting from an RB with the lowest RB index) are used for interleaving, and RBs that are unable to be included in the small bandwidth are not used for interleaving and may not be used for

transmission. $N_{\text{RB}}^{\text{CORESET\_NB}}$ may represent the number of RBs that may be included in the small bandwidth

$N_{\text{REG}}^{\text{CORESET\_NB}}$ may have the same value as that of $N_{\text{RB}}^{\text{CORESET\_NB}} N_{\text{symb}}^{\text{CORESET}}$ . $N_{\text{RB}}^{\text{CORESET\_NB}}$ . The number of RBs may be a multiple of 6, for example 12 or 18. L may be determined as 6, R may be determined as 2, and $n_{\text{shift}}$ may

be determined as $N_{\text{ID}}^{\text{cell}}$ . Interleaving may be performed according to the above values and interleaver $f(\cdot)$ of Equation 2 below.

[Equation 2]

$$f(x) = (rC + c + n_{\text{shift}}) \bmod \left( N_{\text{REG}}^{\text{CORESET\_NB}} / L \right)$$

$$x = cR + r$$

$$r = 0, 1, \ldots, R - 1$$

$$c = 0, 1, \ldots, C - 1$$

$$C = N_{\text{REG}}^{\text{CORESET\_NB}} / (LR)$$

Hereinafter, the interleaving method proposed in this disclosure will be referred to as a second interleaving method, and the existing interleaving method will be referred to as a first interleaving method. The first interleaving method may refer to a method based on Equation 1 described above, and the second interleaving method may refer to a method based on Equation 2.

A base station according to an embodiment of the disclosure may identify (obtain) a frequency bandwidth of a frequency band to be operated in the base station. When the frequency bandwidth is less than a specific threshold or equal to or less than a specific threshold, the base station may interleave the CCE-to-REG mapping of CORESET#0 by using the second interleaving method, otherwise the first interleaving method may be used. According to the first interleaving, $N_{\text{REG}}^{\text{CORESET}}$ may be equal to $N_{\text{RB}}^{\text{CORESET}} N_{\text{symb}}^{\text{CORESET}}$ ($N_{\text{REG}}^{\text{CORESET}} = N_{\text{RB}}^{\text{CORESET}} N_{\text{symb}}^{\text{CORESET}}$). According to the second interleaving, $N_{\text{REG}}^{\text{CORESET\_NB}}$ may be equal to $N_{\text{RB}}^{\text{CORESET\_NB}} N_{\text{symb}}^{\text{CORESET}}$ ($N_{\text{REG}}^{\text{CORESET\_NB}} = N_{\text{RB}}^{\text{CORESET\_NB}} N_{\text{symb}}^{\text{CORESET}}$), and RBs used for interleaving may be RBs that may be included within the small bandwidth (e.g., 12 or 18 RBs starting from an RB with the lowest RB index). Commonly in the first interleaving method and the second interleaving method, L may be determined as 6, R may be determined as 2, and $n_{\text{shift}}$ may be determined as .

In addition, a base station according to an embodiment of the disclosure may identify a frequency band to be operated in the base station. (i) When the identified frequency band is a specific frequency band (e.g., band 8) or (ii) when a bandwidth less than (or equal to or less than) a preconfigured bandwidth (e.g., 5 MHz) in the identified frequency band is used, the base station may interleave the CCE-to-REG mapping of CORESET#0 by using the second interleaving method, and otherwise, may use the first interleaving method. According to the first interleaving method, $N_{\text{REG}}^{\text{CORESET}}$ may be equal to $N_{\text{RB}}^{\text{CORESET}} N_{\text{symb}}^{\text{CORESET}}$ ($N_{\text{REG}}^{\text{CORESET}} = N_{\text{RB}}^{\text{CORESET}} N_{\text{symb}}^{\text{CORESET}}$). According to the second interleaving, $N_{\text{REG}}^{\text{CORESET\_NB}}$ may be equal to $N_{\text{RB}}^{\text{CORESET\_NB}} N_{\text{symb}}^{\text{CORESET}}$ ($N_{\text{REG}}^{\text{CORESET\_NB}} = N_{\text{RB}}^{\text{CORESET\_NB}} N_{\text{symb}}^{\text{CORESET}}$), and RBs used for interleaving may be RBs that may be included within the small bandwidth (e.g., 12 or 18 RBs starting from an RB with the lowest RB index). Commonly in the first interleaving method and the second interleaving method, L may be determined as 6, R may be determined as 2, and $n_{\text{shift}}$ may be determined as $N_{\text{ID}}^{\text{cell}}$ .

According to an embodiment of the disclosure, when a channel bandwidth less than a specific threshold or equal to or less than a specific threshold is used in a frequency band to access, the terminal may process a signal assuming that the CCE-to-REG mapping of CORESET#0 is interleaved. In this case, an interleaving method assumed by the terminal may be based on a second interleaving method. According to an embodiment of the disclosure, (i) when a frequency band to access is a specific frequency band (e.g., band 8) or (ii) when a bandwidth less than (or equal to or less than) a preconfigured bandwidth (e.g., 5 MHz) in the frequency band is used, the terminal may process a signal assuming that the CCE-to-REG mapping of CORESET#0 is interleaved. An interleaving method assumed by the terminal is a second interleaving method and may be different from the first interleaving method. In addition, according to the second interleaving, $N_{\text{REG}}^{\text{CORESET\_NB}}$ may be equal to $N_{\text{RB}}^{\text{CORESET\_NB}} N_{\text{symb}}^{\text{CORESET}}$ ($N_{\text{REG}}^{\text{CORESET\_NB}} = N_{\text{RB}}^{\text{CORESET\_NB}} N_{\text{symb}}^{\text{CORESET}}$), and RBs used for interleaving may be RBs that may be included within the small bandwidth (e.g., 12 or 18 RBs starting from an RB with the lowest RB index). The terminal may process a signal by determining L as 6, R as 2, and $n_{\text{shift}}$ as $N_{\text{ID}}^{\text{cell}}$, commonly in the first interleaving method and the second interleaving method.

According to an embodiment of the disclosure, information on the interleaving method (e.g., indicating whether the first interleaving method or the second interleaving method is applied) may be signaled to the terminal through at least one bit included in MIB and/or SIB1.

According to an embodiment of the disclosure, information on the interleaving method (e.g., the number of RBs included in interleaving in the second interleaving method) may be signaled to the terminal through at least one bit included in MIB and/or SIB 1. For example, information indicating whether the number of RBs included in interleaving in the second interleaving method is 12 or 18 may be signaled to the terminal through at least one bit included in MIB and/or SIB1.

<Second Embodiment>

For search space set s associated with CORESET p, CCE indexes of the aggregation level $L$ corresponding to PDCCH candidates $m_{s,n_{CI}}$ of a search space set within a slot $n_{s,f}^{\mu}$ of an active downlink (DL) BWP belonging to a serving cell corresponding to a carrier indicator field value $n_{CI}$ may be given by Equation 3.

[Equation 3]

$$L \cdot \left\{ \left( Y_{p,n_{s,f}^{\mu}} + \left\lfloor \frac{m_{s,n_{CI}} \cdot N_{\text{CCE},p}}{L \cdot M_{s,\max}^{(L)}} \right\rfloor + n_{CI} \right) mod \left\lfloor N_{\text{CCE},p}/L \right\rfloor \right\} + i$$

In Equation 3, in case of a common search space (CSS), $Y_{p,n_{s,f}^{\mu}}$ has a value of zero. In addition, in case of a UE-specific search space (USS), $Y_{p,n_{s,f}^{\mu}}$ has a value of $\left( A_p \cdot Y_{p,n_{s,f}^{\mu}-1} \right) mod D$, and $Y_{p,-1} = n_{\text{RNTI}} \neq 0$. Here, in case of $pmod3 = 0$, $A_p = 39827$, in case of $pmod3 = 1$, $A_p = 39829$, in case of $pmod3 = 2$, $A_p = 39839$, and D has a value of 65537. In Equation 3, $i$ has a value of 0, $\cdots$, L - 1, $N_{\text{CCE},p}$ refers to the number of CCEs in CORESET p, and CCEs may be numbered (indexed) from 0 to a value of $N_{\text{CCE},p}$ - 1 . When a carrier indicator field is configured by CrossCarrierSchedulingConfig with respect to a serving cell on which PDCCH is monitored, $n_{CI}$ is a value of the carrier indicator field, and when the carrier indicator field is not configured and in case of a CSS, a value of $n_{CI}$ is 0. $m_{s,n_{CI}}$ may have a value of $0, \cdots, M_{s,n_{CI}}^{(L)} - 1$, where a value of $M_{s,n_{CI}}^{(L)}$ refers to the number of PDCCH candidates that the terminal is configured to monitor at aggregation level L in the search space set s of the serving cell corresponding to $n_{CI}$. In case of a CSS, a value of $M_{s,\max}^{(L)}$ is the same as that of $M_{s,0}^{(L)}$ . In case of a USS, a value of $M_{s,\max}^{(L)}$ is equal to the maximum value of $M_{s,n_{CI}}^{(L)}$ corresponding to aggregation level $L$ in the search space set s for each of all the configured $n_{CI}$ values. The value of n_RNTI is the same as the value of C-RNTI.

In a small bandwidth or specific frequency band (e.g., band 8), depending on the position of a search space to which PDCCH candidates transmitted via CORESET #0 are mapped, a problem may occur in which at least some CCE(s) included in one PDCCH candidate are not included in a carrier bandwidth.

According to an embodiment of the disclosure, a search space hash function of CORESET#0 used for communication of a small bandwidth or a specific frequency band may be given by Equation 4. That is, the indexes of CCEs included in the search space of CORESET #0 may be expressed as Equation 4.

[Equation 4]

$$L \cdot \left\{ \left( Y_{p,n_{s,f}^{\mu}} + \left\lfloor \frac{m_{s,n_{CI}} \cdot N_{\text{CCE}_{\text{NB}},0}}{L \cdot M_{s,\max}^{(L)}} \right\rfloor + n_{CI} \right) mod \left\lfloor N_{\text{CCE}_{\text{NB}},0}/L \right\rfloor \right\} + i$$

In equation 4, $N_{\text{CCE\_NB},0}$ refers to the number of CCEs included in the small bandwidth in CORESET#0, and CCEs may be numbered (indexed) from 0 to a value of $N_{\text{CCE\_NB},0}$ - 1. In addition, other parameters of Equation 4 may have the same meaning as the parameters explained in Equation 3.

A base station according to an embodiment of the disclosure may identify (obtain) a frequency bandwidth of a frequency band to be operated in the base station. When the frequency bandwidth is less than a specific threshold or equal to or less than a specific threshold, the base station may use Equation 4 as a search space hash function of CORESET#0, and otherwise, may use Equation 3. In other words, when the frequency bandwidth is less than a specific threshold or equal to or less than a specific threshold, indexes of CCEs included in the search space of CORESET#0 may be determined based on Equation 4, and otherwise, may be determined based on Equation 3.

In addition, a base station according to an embodiment of the disclosure may identify a frequency band to be operated in the base station. (i) When the identified frequency band is a specific frequency band (e.g., band 8) or (ii) when a bandwidth less than (or equal to or less than) a preconfigured bandwidth (e.g., 5 MHz) in the identified frequency band is used, the base station may use Equation 4 as a search space hash function of CORESET#0, and otherwise, may use Equation 3. In other words, (i) when the frequency band identified by the base station is a specific frequency band (e.g., band 8) or (ii) when a bandwidth less than (or equal to or less than) a preconfigured bandwidth (e.g., 5 MHz) is used in the identified frequency band, the indexes of CCEs included in the search space of CORESET#0 may be determined based on Equation 4, and otherwise, may be determined based on Equation 3.

According to an embodiment of the disclosure, when a channel bandwidth less than a specific threshold or equal to or less than a specific threshold is used in a frequency band to access, the terminal may use Equation 4 as a search space hash function of CORESET#0, and otherwise, may perform blind decoding by using Equation 3. In other words, (i) when a frequency band to be accessed by the terminal is a specific frequency band (e.g., band 8) or (ii) a bandwidth less than (or equal to or less than) a preconfigured bandwidth (e.g., 5 MHz) in the frequency band is used, indexes of CCEs included in the search space of CORESET#0 may be determined based on Equation 4, and otherwise, may be determined based on Equation 3.

According to an embodiment of the disclosure, (i) when a frequency band to access is a specific frequency band (e.g., band 8) or (ii) when a bandwidth less than (or equal to or less than) a preconfigured bandwidth (e.g., 5 MHz) in the frequency band is used, the terminal may use Equation 4 as a search space hash function of CORESET#0, and otherwise, may perform blind decoding by using Equation 3. In other words, (i) when a frequency band to be accessed by the terminal is a specific frequency band (e.g., band 8) or (ii) a bandwidth less than (or equal to or less than) a preconfigured bandwidth (e.g., 5 MHz) in the frequency band is used, indexes of CCEs included in the search space of CORESET#0 may be determined based on Equation 4, and otherwise, may be determined based on Equation 3.

<Third Embodiment>

A base station may transmit configuration information (e.g., PDCCH-ConfigCommon) for configuring cell-specific PDCCH parameters provided in the SIB to a terminal. The configuration information may include parameter(s) such as controlResourceSetZero, commonControlResourceSet, searchSpaceZero, commonSearchSpaceList, and/or searchSpaceSIB1. SearchSpaceSIB1 may indicate an ID of a search space for a SIB 1 message. The maximum number of PDCCH candidates for each CCE aggregation level for common search space (CSS) sets (e.g., type0-PDCCH CSS set) configured by searchSpaceSIB1 is shown in Table 13. However, when the CCE-to-REG mapping of CORESET#0 is interleaved in a small carrier bandwidth, a problem may occur in which at least some CCE(s) included in one PDCCH candidates are not included in the bandwidth of a carrier.

[Table 13]

| Table 13: CCE aggregation levels and maximum number of PDCCH candidates per CCE aggregation level for CSS sets configured by *searchSpaceSIB1* | | |
|---|---|---|
| | Aggregation Level | per of Candidates |

According to an embodiment of the disclosure, the CCE aggregation level for common search space sets configured by searchSpaceSIB 1 used for communication in a small bandwidth or a specific frequency band may additionally include CCE aggregation levels of 1 or 2, and may additionally include one or more PDCCH candidates corresponding thereto. In addition, one or more PDCCH candidates corresponding to at least some (e.g., 8 and/or 16) of existing CCE aggregation levels may not be included. For example, the maximum number of PDCCH candidates for each CCE aggregation level for CSS sets (e.g., type0-PDCCH CSS set) configured by searchSpaceSIB1 used for communication in a small bandwidth or a specific frequency band is shown in Table 14.

[Table 14]

| Aggregation Level | per of Candidates |
|---|---|
| | |
| | |
| | |

A base station according to an embodiment of the disclosure may identify (obtain) a frequency bandwidth of a frequency band to be operated in the base station. When the frequency bandwidth is less than a specific threshold or equal to or less than a specific threshold, the base station may transmit a PDCCH by determining to additionally include, as CCE aggregation level and PDCCH candidates for common search space sets configured by searchSpaceSIB 1, CCE aggregation levels of 1 or 2 and one or more PDCCH candidates corresponding thereto and determining not to include one or more PDCCH candidates corresponding to at least some (e.g., 8 and/or 16) of the existing CCE aggregation levels. In addition, a base station according to an embodiment of the disclosure may identify a frequency band to be operated in the base station. (i) When the identified frequency band is a specific frequency band (e.g., band 8) or (ii) when a bandwidth less than (or equal to or less than) a preconfigured bandwidth (e.g., 5 MHz) in the identified frequency band is used, the base station may transmit a PDCCH by determining to additionally include, as CCE aggregation level and PDCCH candidates for common search space sets configured by searchSpaceSIB1, CCE aggregation levels of 1 or 2 and one or more PDCCH candidates corresponding thereto and determining not to include one or more PDCCH candidates corresponding to at least some (e.g., 8 and/or 16) of the existing CCE aggregation levels.

According to an embodiment of the disclosure, when a channel bandwidth less than a specific threshold or equal to or less than a specific threshold is used in a frequency band to access, the terminal may additionally include, as the CCE aggregation level and PDCCH candidates for common search space sets configured by searchSpaceSIB1, CCE aggregation levels of 1 or 2 and one or more PDCCH candidates corresponding thereto.

According to an embodiment of the disclosure, (i) when a frequency band to access is a specific frequency band (e.g., band 8) or (ii) when a bandwidth less than (or equal to or less than) a preconfigured bandwidth (e.g., 5 MHz) in the frequency band is used, the terminal may perform blind decoding of a PDCCH by determining to additionally include, as the CCE aggregation level and PDCCH candidates for common search space sets configured by searchSpaceSIB1, CCE aggregation levels of 1 or 2 and one or more PDCCH candidates corresponding thereto, and determining not to include one or more PDCCH candidates corresponding to at least some (e.g., 8 and/or 16) of the existing CCE aggregation levels.

<Fourth Embodiment>

A terminal may assume that reception occasions of a PSS, SSS, and PBCH are in consecutive symbols and constitute an SS/PBCH block. The terminal may assume that SSS, PBCH DM-RS, and PBCH data have the same energy per resource element (EPRE). In addition, the terminal may assume that a ratio of PSS EPRE to SSS EPRE in the SS/PBCH block is 0 dB or 3 dB. The terminal monitoring PDCCHs for transmission of a DCI format 1_0 with CRC scrambled by SI-RNTI, P-RNTI, or RA-RNTI may assume, if a separate configuration is not established via higher layer signaling, that the ratio of PDCCH DMRS EPRE to SSS EPRE has a value within -8 dB and 8 dB.

In the case of a specific frequency band and/or a specific frequency bandwidth (e.g., a band for supporting a bandwidth of 5 MHz or less), only a subcarrier spacing (SCS) of 15 kHz may be allowed to be used for the SS/PBCH block. Since the SS/PBCH block occupies 20 RBs and each RB has 12 subcarriers, there are a total of 240 subcarriers. Accordingly, the bandwidth occupied by the SS/PBCH block may be equal to 240*SCS. For example, since the PSS and SSS of the SS/PBCH block have 15 kHz * 12 * 12 = 2.16 MHz and the PBCH has 15 kHz * 12 * 20 = 3.6 MHz, at least some resources used in the PBCH may be punctured. For example, resources belonging to at least three RBs may be punctured. Accordingly, an area in which PBCH decoding is possible may be reduced.

In order to solve this problem, the fourth embodiment proposes a method of assuming different ratios of PSS EPRE to SSS EPRE in an SS/PBCH block.

According to an embodiment of the disclosure, when a carrier frequency bandwidth is less than a specific threshold or equal to or less than a specific threshold, or when the frequency band used is a specific frequency band (e.g., band 8), SSS, PBCH DM-RS and PBCH data have the same energy per resource element (EPRE), and a ratio of PSS EPRE to SSS EPRE in the SS/PBCH block may be 0 dB or X dB. The value of X may be determined according to the carrier bandwidth. For example, the X may have a value smaller than 3. As a specific example, the value of X may be substantially equal to a value such as 1.51, 1.79, 2.06, 2.31, 2.54, or 2.76.

A base station according to an embodiment of the disclosure may identify (obtain) a frequency bandwidth of a frequency band to be operated in the base station. When the frequency bandwidth is less than a specific threshold or equal to or less than a specific threshold, the base station may perform transmission by increasing power of a symbol in which the PBCH is transmitted. The base station may allocate and transmit power, which is to be allocated to punctured resources in the symbol in which the PBCH is transmitted, to resources that are not punctured. In addition, the EPRE of PSS and the EPRE of SSS may have a ratio of 0 dB or X dB (e.g., 0< X <3). The value of X may be substantially equal to, for example, 1.51, 1.79, 2.06, 2.31, 2.54, or 2.76.

In addition, a base station according to an embodiment of the disclosure may identify a frequency band to be operated in the base station. (i) When the identified frequency band is a specific frequency band (e.g., band 8) or (ii) When a bandwidth less than (or equal to or less than) a preconfigured bandwidth (e.g., 5 MHz) in the identified frequency band is used, the base station may perform transmission by increasing the power of the symbol in which the PBCH is transmitted. The base station may allocate and transmit power, which is to be allocated to punctured resources in the symbol in which the PBCH is transmitted, to resources that are not punctured. The EPRE of PSS and the EPRE of SSS may have a ratio of 0 dB or X dB (e.g., 0< X <3). The value of X may be substantially equal to, for example, 1.51, 1.79, 2.06, 2.31, 2.54, or 2.76.

According to an embodiment of the disclosure, when a channel bandwidth less than a specific threshold or equal to or less than a specific threshold in a frequency band to access is used, a terminal may process a signal by assuming that the EPRE of the PSS and the EPRE of the SSS have a ratio of 0 dB or X dB (e.g., 0 < X < 3). The value of X may be substantially equal to, for example, 1.51, 1.79, 2.06, 2.31, 2.54, or 2.76.

According to an embodiment of the disclosure, (i) when a frequency band to access is a specific frequency band (e.g., band 8) or (ii) when a bandwidth less than (or equal to or less than) a preconfigured bandwidth (e.g., 5 MHz) in the frequency band is used, the terminal may process the signal assuming that the EPRE of the PSS and the EPRE of the SSS have a ratio of 0 dB or X dB (e.g., X <3). The value of X may be substantially equal to, for example, 1.51, 1.79, 2.06, 2.31, 2.54, or 2.76. When the frequency band to be accessed by the terminal does not correspond to a specific frequency band (e.g., band 8) or a band supporting a bandwidth equal to or less than a preconfigured bandwidth, the EPRE of the PSS and the EPRE of the SSS are assumed to have a ratio of 0 dB or 3 dB.

Based on the above-described embodiment and/or method, the operation of a base station and/or terminal operating in a small bandwidth may be supported.

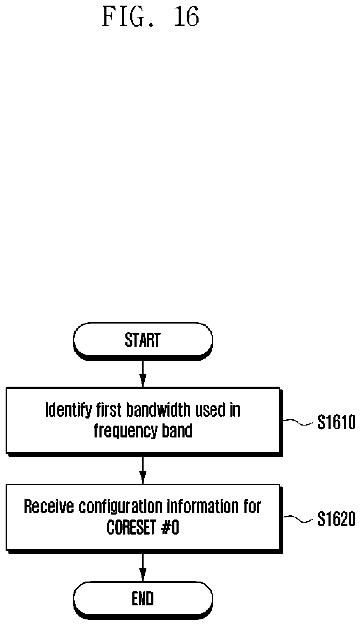

FIG. 16 illustrates an example of a flowchart illustrating an operation of a terminal according to an embodiment of the disclosure.

The terminal may identify a frequency bandwidth of a frequency band to access. The terminal may identify that a first bandwidth less than a preconfigured bandwidth (or a specific threshold) is used in the frequency band to access (S1610). For example, the first bandwidth may be a bandwidth less than a preconfigured bandwidth of 5 MHz. The following operations may be performed based on identification that the first bandwidth is less than a preconfigured bandwidth (or a specific threshold).

The terminal may receive configuration information (e.g., ControlResourceSetZero IE) for CORESET (CORESET#0) having an index of 0, based on the first bandwidth, from the base station (S1620). The configuration information may be received through downlink signaling (e.g., RRC signaling, MIB, SIB, etc.).

The CORESET (CORESET#0) having an index of 0 may include a plurality of REGs to which CCEs are mapped. CCE-to-REG mapping may be based on the methods and/or embodiments proposed by the first embodiment described above. For example, the CCE may be mapped to the plurality of REGs according to one of non-interleaved mapping or interleaved mapping using the number of resource blocks (RBs) included in the first bandwidth.

As a specific example, the terminal may determine, based on identification that the first bandwidth is less than a preconfigured bandwidth (or a specific threshold), that the CCE-to-REG mapping has been performed using a non-interleaved mapping method.

In some cases, the terminal may receive, from the base station, information about whether interleaving is applied when the CCE is mapped to the plurality of REGs. In this case, the terminal may determine whether the CCE-to-REG mapping is interleaved mapping or non-interleaved mapping based on the received information. For example, the information may indicate that CCE-to-REG mapping has been non-interleaved (i.e., interleaving is not applied) when the first bandwidth is smaller than a preconfigured bandwidth (or a specific threshold).

As another specific example, based on the identification that the first bandwidth is smaller than the preconfigured bandwidth (or a specific threshold), the terminal may determine that interleaving has been applied according to the interleaver $f(\cdot)$ of Equation 2 (e.g., the second interleaving method) described above. In this case, the number of RBs included in the first bandwidth may be used for interleaving. For example, the number of RBs may be 12 or 18 starting from the RB having the lowest RB index. In addition, when the CCE is mapped to the plurality of REGs according to interleaving mapping using the number of RBs included in the first bandwidth, the terminal may receive, from the base station, information on the number of RBs included in the first bandwidth based on the MIB or SIB.

The terminal may receive information for configuring a common search space set from the base station. The CCE aggregation level for the common search space set configured based on the information may be 1 or 2.

A CCE index of a search space set associated with the CORESET having an index of 0 may be determined based on the second embodiment described above. For example, a CCE index of a search space set associated with the CORESET having an index of 0 may be determined based on the number of CCEs (e.g., $N_{CCE\_NB,0}$) included in the first bandwidth in the CORESET having an index of 0.

The terminal may receive an SS/PBCH block including PSS, SSS, and PBCH based on the first bandwidth from the base station. A ratio of PSS EPRE to SSS EPRE in the SS/PBCH block may be 0 dB or X dB. In this case, a value of the X is determined according to the size of the first bandwidth, and may be a value smaller than 3.

Although FIG. 16 has been described with reference to an example in which a first bandwidth having a size smaller than a preconfigured bandwidth (or a specific threshold) is used in a frequency band accessed by a terminal, the same may be applied to even a case in which a frequency band accessed by a terminal is a specific band (e.g., band 8).

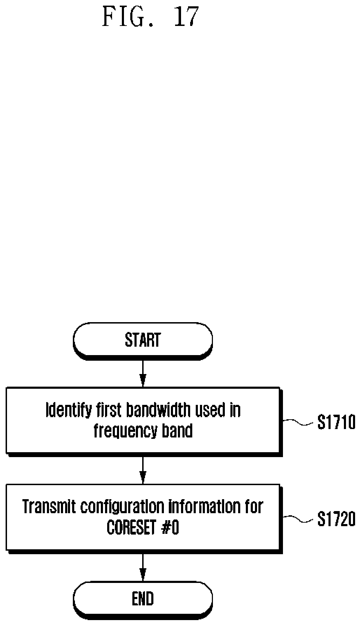

FIG. 17 illustrates an example of a flowchart illustrating an operation of a base station according to an embodiment of the disclosure.

The base station may identify a frequency bandwidth of a frequency band to be operated. The base station may identify that a first bandwidth less than a preconfigured bandwidth (or a specific threshold) is used in the frequency band operated by the base station itself (S1710). For example, the first bandwidth may be less than a preconfigured bandwidth of 5 MHz. The following operations may be performed based on identification that the first bandwidth is less than a preconfigured bandwidth (or a specific threshold).

The base station may transmit, to a terminal, configuration information (e.g., ControlResourceSetZero IE) for CORESET (CORESET#0) having an index of 0, based on the first bandwidth (S1720). The configuration information may be delivered through downlink signaling (e.g., RRC signaling, MIB, SIB, etc.).

The CORESET (CORESET#0) having an index of 0 may include a plurality of REGs to which CCEs are mapped. CCE-to-REG mapping may be based on the methods and/or embodiments proposed by the first embodiment described above. For example, the CCE may be mapped to the plurality of REGs according to one of non-interleaved mapping or interleaved mapping using the number of resource blocks (RBs) included in the first bandwidth.

As a specific example, the base station may perform CCE-to-REG mapping by using a non-interleaved mapping method.

As another specific example, the base station may perform CCE-to-REG mapping by performing interleaving according to the interleaver $f(\cdot)$ of Equation 2 (e.g., the second interleaving method) described above. In this case, the number of RBs included in the first bandwidth may be used. For example, the number of RBs may be 12 or 18 starting from the RB having the lowest RB index. In addition, when the CCE is mapped to the plurality of REGs according to interleaving mapping using the number of RBs included in the first bandwidth, the base station may transmit, to the terminal, information on the number of RBs included in the first bandwidth based on the MIB or SIB.

Although not shown in FIG. 17, in some cases, the base station may transmit, to the terminal, information about whether interleaving is applied when the CCE is mapped to the plurality of REGs.

The base station may transmit information for configuring a common search space set to the terminal. The CCE aggregation level for the common search space set configured based on the information may be 1 or 2.

The CCE index of the search space set associated with the CORESET having an index of 0 may be determined based on the second embodiment described above. For example, the CCE index of the search space set associated with the CORESET having an index of 0 may be determined based on the number of CCEs (e.g., $N_{CCE\_NB,0}$) included in the first bandwidth in the CORESET having an index of 0.

The base station may transmit an SS/PBCH block including PSS, SSS, and PBCH to the terminal based on the first bandwidth. Based on the identification that the first bandwidth is less than a preconfigured bandwidth (or a specific threshold), the base station may perform transmission by increasing the power of a symbol in which the PBCH is transmitted. In addition, a ratio of PSS EPRE to SSS EPRE in the SS/PBCH block may be 0 dB or X dB. In this case, a value of the X is determined according to the size of the first bandwidth and may be a value smaller than 3.

Although FIG. 17 has been described with reference to an example in which a first bandwidth less than a preconfigured bandwidth is used in a frequency band operated by a base station, the same may be applied to even in case that a frequency band accessed by the base station is a specific band (e.g., band 8).

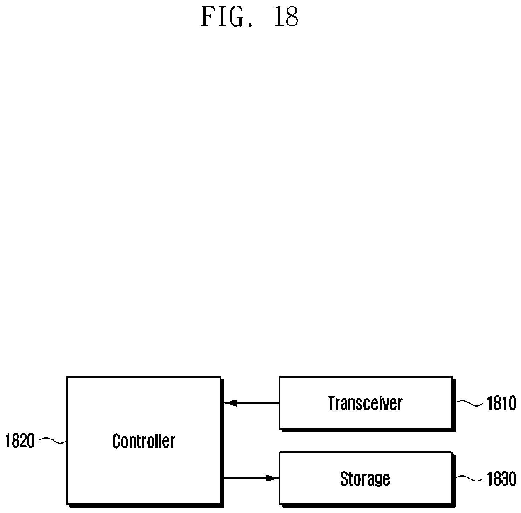

FIG. 18 illustrates a structure of a terminal according to an embodiment of the disclosure.

Referring to FIG. 18, the terminal may include a transceiver 1810, a controller 1820, and a storage 1830. In the disclosure, the controller 1820 may be defined as a circuit, an application-specific integrated circuit, or at least one processor.

The transceiver 1810 may transmit/receive signals with other network entities. The transceiver 1810 may perform signal transmission/reception of the terminal of the disclosure described above.

The controller 1820 may control overall operations of a terminal according to an embodiment proposed in the disclosure. The controller 1820 may obtain synchronization through SSB according to various embodiments of the disclosure, process parameters configured based on subcarrier spacings, and control transmission and reception of PUSCH and PDSCH using processing time.

In addition, the controller 1820 may identify a frequency bandwidth of a frequency band accessed by the terminal, and may identify whether a bandwidth less than a preconfigured bandwidth (or a specific threshold) is used in the frequency band. In addition, the controller 1820 may identify, through the identification process, that a bandwidth less than a preconfigured bandwidth is used in the frequency band accessed by the terminal.

When a bandwidth less than the preconfigured bandwidth is used, a control making determination of an SCS having a size smaller than a preconfigured subcarrier spacing (SCS), and acquisition of a synchronization signal block (SSB) using the determined SCS may be made. In addition, a control resource set0 (CORESET) for a system information block (SIB1) may be identified based on a master information block (MIB) of the SSB, and the CORESET may be identified based on the determined SCS. In addition, a symbol to which a primary synchronization signal (PSS) of the SSB is mapped, a symbol to which a secondary synchronization signal (SSS) is mapped, and a symbol to which a physical broadcast channel (PBCH) is mapped may be discontinuously located. Further, when an SCS smaller than 15 kHz is used, the maximum number of SSBs mappable to a half frame may be 1 or 2. In addition, when an SCS smaller than 15 kHz is used, the minimum transmission periodicity of the SSB may be 10 ms or more.

In addition, the controller 1820 may control the transceiver 1810 to receive configuration information (e.g., ControlResourceSetZero IE) for CORESET (CORESET#0) having an index of 0, based on the small bandwidth (e.g., the first bandwidth). The CORESET (CORESET#0) having an index of 0 may include a plurality of REGs to which CCEs are mapped. For example, the CCE may be mapped to the plurality of REGs according to one of non-interleaved mapping or interleaved mapping using the number of resource blocks (RBs) included in the first bandwidth.

In addition, the controller 1820 may control the transceiver 1810 to receive information about whether interleaving is applied when CCE is mapped to the plurality of REGs, information about the number of RBs included in the small-sized bandwidth (e.g., the first bandwidth), information for configuring a common search space set, and/or an SS/PBCH block.

The storage 1830 may store at least one of information transmitted/received through the transceiver 1810 and information generated through the controller 1820.

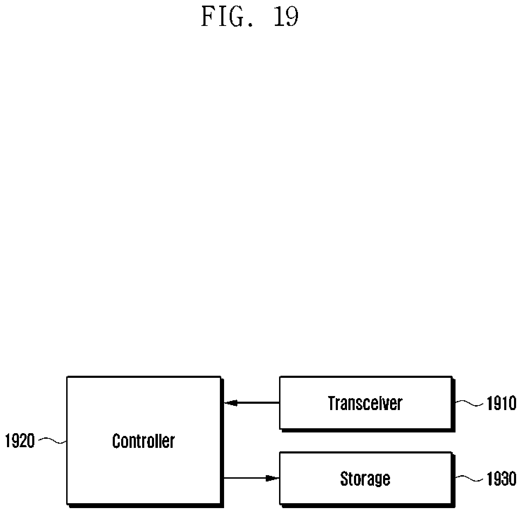

FIG. 19 illustrates a structure of a base station according to an embodiment of the disclosure.

Referring to FIG. 19, the base station may include a transceiver 1910, a controller 1920, and a storage 1930. In the disclosure, the controller 1920 may be defined as a circuit, an application-specific integrated circuit, or at least one processor.

The transceiver 1910 may transmit/receive signals with other network entities.

The controller 1920 may control overall operations of a base station according to an embodiment proposed in the disclosure. The controller 1920 may configure an SSB according to various embodiments of the disclosure, and may process parameters configured based on subcarrier spacings and control transmission and reception of PUSCH and PDSCH using processing time.

In addition, the controller 1920 may identify a frequency bandwidth of a frequency band operated by the base station, and may identify whether a bandwidth less than a preconfigured bandwidth (or a specific threshold) is used in the frequency band. In addition, the controller 1920 may identify, through the identification process, that a bandwidth less than a preconfigured bandwidth is used in the frequency band operated by the base station.

When a bandwidth less than the preconfigured bandwidth is used, a control making determination of an SCS having a size smaller than a preconfigured subcarrier spacing (SCS), generation of a synchronization signal block (SSB) using the determined SCS, and transmission of the SSB may be made. In addition, a control resource set0 (CORESET) for a system information block (SIB1) may be identified based on a master information block (MIB) of the SSB, and the CORESET may be identified based on the determined SCS. In addition, a symbol to which a primary synchronization signal (PSS) of the SSB is mapped, a symbol to which a secondary synchronization signal (SSS) is mapped, and a symbol to which a physical broadcast channel (PBCH) is mapped may be discontinuously located. Further, when an SCS smaller than 15 kHz is used, the maximum number of SSBs mappable to a half frame may be 1 or 2. In addition, when an SCS smaller than 15 kHz is used, the minimum transmission periodicity of the SSB may be 10 ms or more.

In addition, the controller 1920 may control the transceiver 1810 to transmit, to the terminal, configuration information (e.g., ControlResourceSetZero IE) for CORESET (CORESET#0) having an index of 0, based on the small bandwidth (e.g., the first bandwidth). The CORESET (CORESET#0) having an index of 0 may include a plurality of REGs to which CCEs are mapped. For example, the CCE may be mapped to the plurality of REGs according to one of non-interleaved mapping or interleaved mapping using the number of resource blocks (RBs) included in the first bandwidth.

In addition, the controller 1920 may control the transceiver 1910 to transmit, to a terminal, information about whether interleaving is applied when CCE is mapped to the plurality of REGs, information about the number of RBs included in the small-sized bandwidth (e.g., the first bandwidth), information for configuring a common search space set, and/or an SS/PBCH block.

The storage 1930 may store at least one of information transmitted/received through the transceiver 1910 and information generated through the controller 1920.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory (RAM) and a flash memory, a Read Only Memory (ROM), an electrically erasable programmable read only memory (EEPROM), a magnetic disc storage device, a Compact Disc-ROM (CD-ROM), Digital Versatile Discs (DVDs), other type optical storage devices, or a magnetic cassette. Alternatively, any combination of some or all of the memory devices may form a memory in which the program is stored. Further, a plurality of such memories may be included in the electronic device.

In addition, the programs may be stored in an attachable storage device which may access the electronic device through communication networks such as the Internet, Intranet, a local area network (LAN), a wide LAN (WLAN), and a storage area network (SAN) or a combination thereof. Such a storage device may access the electronic device performing embodiments of the disclosure via an external port. Further, a separate storage device on the communication network may access a device performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings have been presented to easily explain the technical contents of the disclosure and help understanding of the disclosure, and are not intended to limit the scope of the disclosure. That is, it will be apparent to those skilled in the art that other modifications and changes may be made thereto on the basis of the technical idea of the disclosure. Further, the above respective embodiments may be employed in combination, as necessary. For example, one embodiment of the disclosure may be partially combined with other embodiments to operate a BS and a terminal. Further, embodiments of the disclosure can be applied to other communication systems, other variants based on the technical idea of the embodiments may also be implemented in other communication systems.

**Claims**

1. A method performed by a base station in a wireless communication system, the method comprising:

   identifying that a first bandwidth having a size smaller than a preconfigured bandwidth is used in a frequency band operated by the base station; and
   transmitting, to a terminal, configuration information for a control resource set (CORESET) having an index of 0, based on the first bandwidth,
   wherein the CORESET having an index of 0 comprises a plurality of resource element groups (REGs) to which a control channel element (CCE) is mapped, and

wherein the CCE is mapped to the plurality of REGs according to one of non-interleaved mapping or interleaved mapping using the number of resource blocks (RBs) included in the first bandwidth.

2. The method of claim 1, further comprising:
transmitting, to the terminal, information about whether interleaving is applied in case that the CCE is mapped to the plurality of REGs.

3. The method of claim 1, further comprising:

in case that the CCE is mapped to the plurality of REGs according to the interleaved mapping using the number of RBs included in the first bandwidth, transmitting information on the number of RBs included in the first bandwidth to the terminal,
wherein the information is transmitted based on a master information block (MIB) or a system information block (SIB).

4. The method of claim 1, wherein a CCE index of a search space set associated with the CORESET having an index of 0 is determined based on the number of CCEs included in the first bandwidth in the CORESET having an index of 0.

5. The method of claim 1, further comprising:

transmitting information for configuring a common search space set to the terminal,
wherein a CCE aggregation level for the common search space set configured based on the information is 1 or 2.

6. The method of claim 1, further comprising:

transmitting an SS/PBCH block including a primary synchronization signal (PSS), a secondary synchronization signal (SSS), and a physical broadcast channel (PBCH) based on the first bandwidth,
wherein a ratio of PSS energy per resource element (EPRE) to SSS EPRE in the SS/PBCH block is XdB, and X, which is determined according to the size of the first bandwidth, is a value smaller than 3.

7. A method performed by a terminal in a wireless communication system, the method comprising:

identifying that a first bandwidth having a size smaller than a preconfigured bandwidth is used in a frequency band accessed by the terminal; and
receiving configuration information for a control resource set (CORESET) having an index of 0, based on the first bandwidth,
wherein the CORESET having an index of 0 comprises a plurality of resource element groups (REGs) to which a control channel element (CCE) is mapped, and
wherein the CCE is mapped to the plurality of REGs according to one of non-interleaved mapping or interleaved mapping using the number of resource blocks (RBs) included in the first bandwidth.

8. The method of claim 7, further comprising:
receiving information about whether interleaving is applied in case that the CCE is mapped to the plurality of REGs.

9. The method of claim 7, further comprising:

in case that the CCE is mapped to the plurality of REGs according to the interleaved mapping using the number of RBs included in the first bandwidth, receiving information on the number of RBs included in the first bandwidth from the base station,
wherein the information is received based on a master information block (MIB) or a system information block (SIB).

10. The method of claim 7, wherein a CCE index of a search space set associated with the CORESET having an index of 0 is determined based on the number of CCEs included in the first bandwidth in the CORESET having an index of 0.

11. The method of claim 7, further comprising:

receiving information for configuring a common search space set from the base station,

wherein a CCE aggregation level for the common search space set configured based on the information is 1 or 2.

12. The method of claim 7, further comprising:

receiving an SS/PBCH block including a primary synchronization signal (PSS), a secondary synchronization signal (SSS), and a physical broadcast channel (PBCH) based on the first bandwidth, wherein a ratio of PSS energy per resource element (EPRE) to SSS EPRE in the SS/PBCH block is XdB, and X, which is determined according to the size of the first bandwidth, is a value smaller than 3.

13. A base station in a wireless communication system, the base station comprising:

a transceiver; and
a controller configured to perform control to identify that a first bandwidth having a size smaller than a preconfigured bandwidth is used in a frequency band operated by the base station, and transmit, to a terminal, configuration information for a control resource set (CORESET) having an index of 0, based on the first bandwidth, wherein the CORESET having an index of 0 comprises a plurality of resource element groups (REGs) to which a control channel element (CCE) is mapped, and
wherein the CCE is mapped to the plurality of REGs according to one of non-interleaved mapping or interleaved mapping using the number of resource blocks (RBs) included in the first bandwidth.

14. A terminal in a wireless communication system, the terminal comprising:

a transceiver; and
a controller configured to perform control to identify that a first bandwidth having a size smaller than a preconfigured bandwidth is used in a frequency band accessed by the terminal, and receive configuration information for a control resource set (CORESET) having an index of 0, based on the first bandwidth, wherein the CORESET having an index of 0 comprises a plurality of resource element groups (REGs) to which a control channel element (CCE) is mapped, and
wherein the CCE is mapped to the plurality of REGs according to one of non-interleaved mapping or interleaved mapping using the number of resource blocks (RBs) included in the first bandwidth.

15. The terminal of claim 14, wherein the controller is configured to, in case that the CCE is mapped to the plurality of REGs according to the interleaved mapping using the number of RBs included in the first bandwidth, control the transceiver to receive information on the number of RBs included in the first bandwidth, wherein the information is received based on a master information block (MIB) or a system information block (SIB).

# FIG. 1

# FIG. 2

# FIG. 3

One subframe (310)

$N_{symb}^{subframe,\mu}$ OFDM symbols

1 OFDM symbols (302)

1 subcarrier (303)

$k=N_{RB,x}^{max,\mu}N_{sc}^{RB}-1$

$N_{RB}^{\mu}N_{sc}^{RB}$ subcarriers

Resource block $N_{sc}^{RB}$ subcarriers (304)

Resource element (k,l) (301)

Frequency

$k=0$

$l=0$

$l=14\cdot2^{\mu}-1$

Time

# FIG. 4

1 frame (400)

1 subframe (401)

μ=0 (404)

| 0 | 1 | 2 | 3 | 4 | 5 | 6 | 7 | 8 | 9 |

slot (402)

μ=1 (405)

| 0 | 1 | 2 | 3 | 4 | 5 | 6 | 7 | 8 | 9 | 10 | 11 | 12 | 13 | 14 | 15 | 16 | 17 | 18 | 19 |

slot (403)

EP 4 426 035 A1

# FIG. 5

# FIG. 6

# FIG. 7

| SCS | Bandwidth |
|---|---|
| 15 kHz | 3.6 MHz |
| 30 kHz | 7.2 MHz |
| 120 kHz | 28.8 MHz |
| 240 kHz | 57.6 MHz |

FIG. 8

PSS PBCH SSS PBCH

12RBs 20RBs

4 OFDM symbols

SSB ($\mu$=15kHz)

PSS PBCH SSS PBCH

12RBs 20RBs

4 OFDM symbols

SSB ($\mu$=7.5kHz)

FIG. 9

Subframe (1ms)

901     903     905     907

LTE (15kHz)

| LTE CRS | | | | LTE CRS | | | LTE CRS | | | LTE CRS | | |

0   1   2   3   4   5   6   7   8   9   10   11   12   13

NR
(30kHz, pattern2)

SS/PBCH block    SS/PBCH block    SS/PBCH block    SS/PBCH block

0 1 2 3 4 5 6 7 8 9 10 11 12 13   0 1 2 3 4 5 6 7 8 9 10 11 12 13

911     913     915     917

NR slot (0.5ms, 30kHz)     NR slot (0.5ms, 30kHz)

EP 4 426 035 A1

# FIG. 10

Subframe (1ms)

LTE (μ=15kHz)

CRS  CRS  CRS  CRS  CRS  CRS

PSS

PBCH

PBCH

SSS

PBCH

PBCH

12RBs

20RBs

4 OFDM symbols

SSB (μ=7.5kHz)

# FIG. 11

LTE (μ=15kHz)

Subframe (1ms)

CRS CRS CRS CRS CRS CRS

PSS

PBCH

PBCH
SSS
PBCH

PBCH

12RBs

20RBs

1 OFDM symbols

SSB (μ=7.5kHz)

# FIG. 12

# FIG. 13

FIG. 14

```
        ┌──────────────┐
        │    START     │
        └──────────────┘
                │
                ▼
┌─────────────────────────────────────┐
│  Identify preconfigured band or bandwidth  │ ～ 1410
└─────────────────────────────────────┘
                │
                ▼
┌─────────────────────────────────────┐
│           Determine SCS             │ ～ 1420
└─────────────────────────────────────┘
                │
                ▼
┌─────────────────────────────────────┐
│         Detect and obtain SSB        │ ～ 1430
└─────────────────────────────────────┘
                │
                ▼
┌─────────────────────────────────────┐
│  Perform communication applied with  │ ～ 1440
│       SCS-related parameter          │
└─────────────────────────────────────┘
                │
                ▼
        ┌──────────────┐
        │     END      │
        └──────────────┘
```

# FIG. 15

```
          ┌──────────────┐
          │    START     │
          └──────┬───────┘
                 │
                 ▼
  ┌──────────────────────────────────┐
  │ Identify preconfigured band or   │ ──── 1510
  │           bandwidth              │
  └──────────────┬───────────────────┘
                 │
                 ▼
  ┌──────────────────────────────────┐
  │         Determine SCS            │ ──── 1520
  └──────────────┬───────────────────┘
                 │
                 ▼
  ┌──────────────────────────────────┐
  │    Generate and transmit SSB     │ ──── 1530
  └──────────────┬───────────────────┘
                 │
                 ▼
  ┌──────────────────────────────────┐
  │ Perform communication applied    │ ──── 1540
  │   with SCS-related parameter     │
  └──────────────┬───────────────────┘
                 │
                 ▼
          ┌──────────────┐
          │     END      │
          └──────────────┘
```

# FIG. 16

```
        ┌─────────────────┐
        │      START      │
        └────────┬────────┘
                 │
                 ▼
   ┌──────────────────────────┐
   │  Identify first bandwidth used in  │ ── S1610
   │       frequency band       │
   └──────────┬───────────────┘
              │
              ▼
   ┌──────────────────────────┐
   │ Receive configuration information for │ ── S1620
   │          CORESET #0          │
   └──────────┬───────────────┘
              │
              ▼
        ┌─────────────────┐
        │       END       │
        └─────────────────┘
```

# FIG. 17

START

Identify first bandwidth used in
frequency band — S1710

Transmit configuration information for
CORESET #0 — S1720

END

FIG. 18

1820 ~ Controller

Transceiver ~ 1810

Storage ~ 1830

# FIG. 19

1920 — Controller

Transceiver — 1910

Storage — 1930

| INTERNATIONAL SEARCH REPORT | International application No. |
|---|---|
| | **PCT/KR2022/019446** |

**A.    CLASSIFICATION OF SUBJECT MATTER**

H04W 72/04(2009.01)i; H04L 5/00(2006.01)i

According to International Patent Classification (IPC) or to both national classification and IPC

**B.    FIELDS SEARCHED**

Minimum documentation searched (classification system followed by classification symbols)

H04W 72/04(2009.01); H04J 11/00(2006.01); H04L 5/00(2006.01); H04W 52/02(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: reduced bandwidth, CORESET 0 configuration, CCE-REG mapping, non-interleaved, interleaved

**C.    DOCUMENTS CONSIDERED TO BE RELEVANT**

| Category* | Citation of document, with indication, where appropriate, of the relevant passages | Relevant to claim No. |
|---|---|---|
| Y | WO 2020-258216 A1 (QUALCOMM INCORPORATED) 30 December 2020 (2020-12-30)<br>See paragraphs [0072]-[0163]; claims 30 and 45; and figures 7-12 and 15. | 1-2,5,7-8,11,13-14 |
| A | | 3-4,6,9-10,12,15 |
| Y | WO 2021-201757 A1 (TELEFONAKTIEBOLAGET LM ERICSSON (PUBL)) 07 October 2021 (2021-10-07)<br>See pages 14-20; and figures 5-9. | 1-2,5,7-8,11,13-14 |
| Y | WO 2019-031813 A1 (LG ELECTRONICS INC.) 14 February 2019 (2019-02-14)<br>See paragraph [0044]. | 2,8 |
| Y | US 2020-0413335 A1 (ASUSTEK COMPUTER INC.) 31 December 2020 (2020-12-31)<br>See paragraphs [0262]-[0268]. | 5,11 |
| A | US 2021-0250929 A1 (QUALCOMM INCORPORATED) 12 August 2021 (2021-08-12)<br>See paragraphs [0047]-[0067]; and figures 3A-4. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 March 2023** | **09 March 2023** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/019446**

| Patent document cited in search report | | | Publication date (day/month/year) | Patent family member(s) | | | Publication date (day/month/year) |
|---|---|---|---|---|---|---|---|
| WO | 2020-258216 | A1 | 30 December 2020 | CN | 113994618 | A | 28 January 2022 |
| | | | | EP | 3991337 | A1 | 04 May 2022 |
| | | | | US | 2022-0304014 | A1 | 22 September 2022 |
| WO | 2021-201757 | A1 | 07 October 2021 | | None | | |
| WO | 2019-031813 | A1 | 14 February 2019 | US | 11197285 | B2 | 07 December 2021 |
| | | | | US | 2020-0245301 | A1 | 30 July 2020 |
| US | 2020-0413335 | A1 | 31 December 2020 | CN | 110784914 | A | 11 February 2020 |
| | | | | EP | 3599733 | A1 | 29 January 2020 |
| | | | | JP | 2020-022159 | A | 06 February 2020 |
| | | | | JP | 6913129 | B2 | 04 August 2021 |
| | | | | KR | 10-2020-0012733 | A | 05 February 2020 |
| | | | | KR | 10-2202779 | B1 | 14 January 2021 |
| | | | | TW | 202008820 | A | 16 February 2020 |
| | | | | US | 10820269 | B2 | 27 October 2020 |
| | | | | US | 2020-0037245 | A1 | 30 January 2020 |
| US | 2021-0250929 | A1 | 12 August 2021 | | None | | |

Form PCT/ISA/210 (patent family annex) (July 2022)